# EUROPEAN PATENT APPLICATION

(11) **EP 4 564 489 A1**
(43) Date of publication of application: **04.06.2025**
(21) Application number: 23846667.6
(22) Date of filing: 28.07.2023
(51) Int. Cl.: H01M 8/1004, H01M 8/0273, H01M 8/10

(54) **MEMBRANE ELECTRODE ASSEMBLY, POLYMER ELECTROLYTE FUEL CELL, METHOD FOR PRODUCING MEMBRANE ELECTRODE ASSEMBLY, AND METHOD FOR PRODUCING POLYMER ELECTROLYTE FUEL CELL**

(30) Priority: 29.07.2022 JP 2022121774
(71) Applicant: Toppan Holdings Inc., Tokyo 110-0016 (JP)
(72) Inventor: KATO, Shigemoto, Tokyo 110-0016 (JP); TANIGUCHI, Tomoaki, Tokyo 110-0016 (JP); HIRUMA, Yurika, Tokyo 110-0016 (JP)
(74) Representative: Hoffmann Eitle
(86) International application number: PCT/JP2023/027718
(87) International publication number: WO 2024/024937

(57) **Abstract**

A membrane electrode assembly includes an electrolyte layer, and a catalyst layer that includes particles carrying a catalyst metal and is positioned on a first surface of the electrolyte layer. The membrane electrode assembly includes a symbol containing therein encoded information required for manufacture of the membrane electrode assembly. The symbol is a discolored laser trace in the electrolyte layer, and is disposed in an edge of the first surface where the catalyst layer is not positioned.

## Description

### [Technical Field]

The present disclosure relates to a membrane electrode assembly, a polymer electrolyte fuel cell, a method for manufacturing a membrane electrode assembly, and a method for manufacturing a polymer electrolyte fuel cell.

### [Background Art]

One exemplary membrane electrode assembly included in a polymer electrolyte fuel cell includes an electrolyte layer, a pair of catalyst layers, and a pair of gaskets. The electrolyte layer includes therein a first surface and a second surface that face each other. A first catalyst layer is positioned in one part of the first surface, and a second catalyst layer is positioned in one part of the second surface. A first gasket surrounds the first catalyst layer, and covers an area of the first surface where the first catalyst layer is not positioned. A second gasket surrounds the second catalyst layer, and covers an area of the second surface where the second catalyst layer is not positioned.

When the membrane electrode assembly is manufactured, the first gasket is attached to the first surface of the electrolyte membrane and the second gasket is attached to the second surface. **In** addition, coating films are formed by coating the first and second surfaces with a slurry for forming a catalyst layer. By drying the coating films, the catalyst layers positioned on the surfaces are formed, and a membrane electrode assembly can thereby be obtained (for example, see Patent Literature 1).

### [Citation List]

### [Patent Literature]

[PTL 1] JP 2014-183022 A

### [Summary of the Invention]

### [Technical Problem]

Reading manufacture information on a membrane electrode assembly, such as a manufacturing place and manufacture conditions, from a used fuel cell makes it possible to identify a relationship between the manufacture information on the membrane electrode assembly and the used state of the fuel cell, and a relationship between the manufacture information on the membrane electrode assembly and the usage history of the fuel cell. The relationship between the manufacture information on a membrane electrode assembly and the used state of a fuel cell is useful to determine, for example, whether the manufacture conditions of the membrane electrode assembly have been appropriate for the life of the fuel cell. The relationship between the manufacture information on a membrane electrode assembly and the usage history of a fuel cell helps, for example, adapting the manufacture conditions of a membrane electrode assembly for further use environment required of a fuel cell. From these viewpoints, a technique of enabling reading of manufacture information on a membrane electrode assembly from a used fuel cell is expected due to recent strong requirements for improving the performance of a fuel cell.

### [Solution to Problem]

A membrane electrode assembly for solving the above problem includes an electrolyte layer, and a catalyst layer that includes particles carrying a catalyst metal and is positioned on a first surface of the electrolyte layer. The membrane electrode assembly includes a symbol containing therein encoded information required for manufacture of the membrane electrode assembly. The symbol is a discolored laser trace in the electrolyte layer, and is disposed in an edge of the first surface where the catalyst layer is not positioned.

A method, for solving the above problem, for manufacturing a membrane electrode assembly includes forming, on a first surface of an electrolyte layer, a catalyst layer including particles carrying a catalyst metal. The method for manufacturing a membrane electrode assembly includes forming a symbol containing therein encoded information required for manufacture of the membrane electrode assembly, in an edge of the first surface where the catalyst layer is not positioned, by applying laser light to the edge with a carbon dioxide laser.

**In** the membrane electrode assembly and by the method for manufacturing a membrane electrode assembly, a symbol containing therein encoded information required for manufacture of the membrane electrode assembly is disposed in a part of a first surface of an electrolyte layer where a catalyst layer is not positioned. The part of the first surface where the catalyst layer is positioned is directly involved in a cell reaction during use of a fuel cell and is covered with the catalyst layer having a black-based color caused by colored materials such as catalyst metals. The edge of the first surface where the catalyst layer is not positioned is not directly involved in a cell reaction, and is not covered with the catalyst layer having a black-based color and thus is colorless transparent or colored transparent. The symbol produced by discoloration by a laser trace in the electrolyte layer is not directly involved in a cell reaction and therefore maintains color contrast required for decoding, enabling decoding of the information after use of a fuel cell.

**In** the membrane electrode assembly, the maximum value of depth of the symbol is 3 µm or more, and the symbol need not penetrate the electrolyte layer in the thickness direction of the electrolyte layer. This membrane electrode assembly enables an increase of reliability of retaining the symbol even when the surface of the electrolyte layer where the symbol is positioned is abraded.

**In** the membrane electrode assembly, the maximum value of depth of the symbol may be 2/3 or less the average value of thickness of the electrolyte layer. This membrane electrode assembly inhibits damage to the symbol in the electrolyte layer even when a gasket is removed from the electrolyte layer in disassembly of the membrane electrode assembly.

**In** the membrane electrode assembly, the symbol may be disposed so as to be covered with a gasket in contact with the edge. This membrane electrode assembly increases robustness of the information on manufacture of the membrane electrode assembly because the symbol is covered with the gasket in contact with the first surface.

**In** the membrane electrode assembly, the catalyst layer is a first catalyst layer, the symbol is a first symbol containing therein encoded information required for manufacture of the first catalyst layer, the membrane electrode assembly further includes: a second catalyst layer that includes particles carrying a catalyst metal and is positioned on a second surface opposite to the first surface of the electrolyte layer; and a second symbol containing therein encoded information required for manufacture of the second catalyst layer, the second symbol is a discolored laser trace in the electrolyte layer, and may be disposed at a position other than a position opposite to the first symbol, in an edge of the second surface where the second catalyst layer is not positioned.

**In** the membrane electrode assembly, the information required for manufacture of the first catalyst layer is decoded from the first symbol, and the information required for manufacture of the second catalyst layer is decoded from the second symbol. Since the second symbol is not positioned opposite to the first symbol, the decoding accuracy of the information required for manufacture of the first catalyst layer and the decoding accuracy of the information required for manufacture of the second catalyst layer are increased, compared to the arrangement in which the two symbols are opposite to each other.

**In** the membrane electrode assembly, the electrolyte layer includes two end portions that are parallel with each other, and the first and second symbols may be disposed at different end portions or one end portion of the two end portions.

**In** the method for manufacturing a membrane electrode assembly, the catalyst layer is a first catalyst layer, the symbol is a first symbol containing therein encoded information required for manufacture of the first catalyst layer, the method includes forming a second catalyst layer including particles carrying a catalyst metal, on a second surface opposite to the first surface of the electrolyte layer, and forming a second symbol containing therein encoded information required for manufacture of the second catalyst layer, by applying, with the carbon dioxide laser, laser light to an edge of the second surface where the second catalyst layer is not positioned, the forming a first symbol includes performing, after forming the first symbol at one end portion of the electrolyte layer, inspection of the first symbol while conveying the electrolyte layer in a conveyance direction along the one end portion, and the forming a second symbol may include performing, after forming the second symbol at the one end portion or another end portion parallel with the one end portion of the electrolyte layer, inspection of the second symbol while conveying the electrolyte layer in the conveyance direction.

**In** the manufacture of a membrane electrode assembly, a laminate is formed by laminating a catalyst layer on an electrolyte layer, and inspection of the laminate is performed while the laminate is conveyed in one conveyance direction. **In** the membrane electrode assembly and by the method for manufacturing a membrane electrode assembly, a first symbol and a second symbol are disposed at two end portions to be parallel with each other or at one end portion, and therefore the conveyance of a laminate in the conveyance direction toward an inspection device enables the inspection of the symbols. This configuration reduces the burden of changing the arrangement of an inspection device or increasing the number of inspection devices in the inspection of the symbols.

A membrane electrode assembly for solving the above problem includes an electrolyte layer, and a catalyst layer that includes particles carrying a catalyst metal and is positioned on a first surface of the electrolyte layer. The membrane electrode assembly includes a gasket in contact with an edge of the first surface where the catalyst layer is not positioned, and a symbol containing therein encoded information required for manufacture of the membrane electrode assembly. The symbol is a discoloration in the gasket produced by a laser trace.

A method, for solving the above problem, for manufacturing a membrane electrode assembly includes forming, on a first surface of an electrolyte layer, a catalyst layer including particles carrying a catalyst metal. The method for manufacturing a membrane electrode assembly includes forming a symbol containing therein encoded information required for manufacture of the membrane electrode assembly, in a gasket in contact with an edge of the first surface where the catalyst layer is not positioned, by applying laser light to the gasket.

**In** the membrane electrode assembly and by the method for manufacturing a membrane electrode assembly, a symbol containing therein encoded information required for manufacture of the membrane electrode assembly is positioned in a gasket disposed in an edge of a first surface of an electrolyte layer where a catalyst layer is not positioned. The part of the first surface where the catalyst layer is positioned is directly involved in a cell reaction during use of a fuel cell and is covered with the catalyst layer having a black-based color caused by colored materials such as catalyst metals. The edge of the first surface where the catalyst layer is not positioned is not directly involved in a cell reaction, and is not covered with the catalyst layer having a black-based color and thus is colorless transparent or colored transparent. The symbol that is a discolored laser trace in the gasket is not directly involved in a cell reaction and therefore maintains color contrast required for decoding, enabling decoding of the information after use of a fuel cell.

**In** the membrane electrode assembly, the maximum value of the depth of the symbol is 3 µm or more, and the symbol need not penetrate the gasket in the thickness direction of the gasket. This membrane electrode assembly enables an increase of reliability of retaining the symbol even when the surface of the gasket where the symbol is positioned is abraded.

**In** the membrane electrode assembly, the maximum value of the depth of the symbol may be 2/3 or less the average value of thickness of the gasket. This membrane electrode assembly inhibits damage to the symbol in the electrolyte layer even when the gasket is removed from the electrolyte layer in disassembly of the membrane electrode assembly.

**In** the membrane electrode assembly, the symbol may be positioned on a surface of the gasket that faces the electrolyte layer. This membrane electrode assembly increases robustness of the information on manufacture of the membrane electrode assembly because the symbol positioned in the gasket is covered with the electrolyte layer.

**In** the method for manufacturing a membrane electrode assembly, forming a symbol may include forming the symbol by, after disposing the gasket so as to be in contact with the edge, applying the laser light through the electrolyte layer into the gasket with an ultraviolet laser.

By this method for manufacturing a membrane electrode assembly, it is possible to form a symbol in a gasket by applying laser light through an electrolyte layer to the gasket in contact with an edge of the electrolyte layer. As a result, the symbol can be protected by the electrolyte layer from the time of formation of the symbol.

A polymer electrolyte fuel cell for solving the above problem includes the membrane electrode assembly described above.

A method, for solving the above problem, for manufacturing a polymer electrolyte fuel cell includes manufacturing a membrane electrode assembly by the method described above for manufacturing a membrane electrode assembly.

### [Advantageous Effects of the Invention]

The present invention enables reading of manufacture information on a membrane electrode assembly from a used fuel cell.

### [Brief Description of the Drawings]

Fig. 1 is an exploded perspective view illustrating a structure of a polymer electrolyte fuel cell including a membrane electrode assembly according to a first embodiment.
Fig. 2 is a cross-sectional view illustrating a structure of the membrane electrode assembly illustrated in Fig. 1.
Fig. 3 is a flow chart for describing a method for manufacturing the membrane electrode assembly according to the first embodiment.
Fig. 4 is a flow chart for describing a method for manufacturing a membrane electrode assembly according to a modification example of the first embodiment.
Fig. 5 is a cross-sectional view illustrating a structure of a membrane electrode assembly according to a modification example of the first embodiment.
Fig. 6 is a flow chart for describing a method for manufacturing the membrane electrode assembly according to the modification example of the first embodiment.
Fig. 7 is a cross-sectional view illustrating a structure of a membrane electrode assembly according to a modification example of the first embodiment.
Fig. 8 is a flow chart for describing a method for manufacturing the membrane electrode assembly according to the modification example of the first embodiment.
Fig. 9 is a perspective view illustrating a structure of a collective roll of membrane electrode assemblies according to a second embodiment.
Fig. 10 is a cross-sectional view illustrating the structure of the collective roll of the membrane electrode assemblies illustrated in Fig. 9.
Fig. 11 is a cross-sectional view illustrating a structure of a membrane electrode assembly formed from the collective roll of the membrane electrode assemblies illustrated in Fig. 9.
Fig. 12 is a flow chart for describing a method for manufacturing the membrane electrode assembly according to the second embodiment.
Fig. 13 is a cross-sectional view illustrating a structure of a membrane electrode assembly according to a modification example of the second embodiment.
Fig. 14 is a flow chart for describing a method for manufacturing the membrane electrode assembly according to the modification example of the second embodiment.
Fig. 15 is a cross-sectional view illustrating a structure of a membrane electrode assembly according to a modification example of the second embodiment.
Fig. 16 is a flow chart for describing a method for manufacturing the membrane electrode assembly according to the modification example of the second embodiment.

### [Description of the Embodiments]

### [First embodiment]

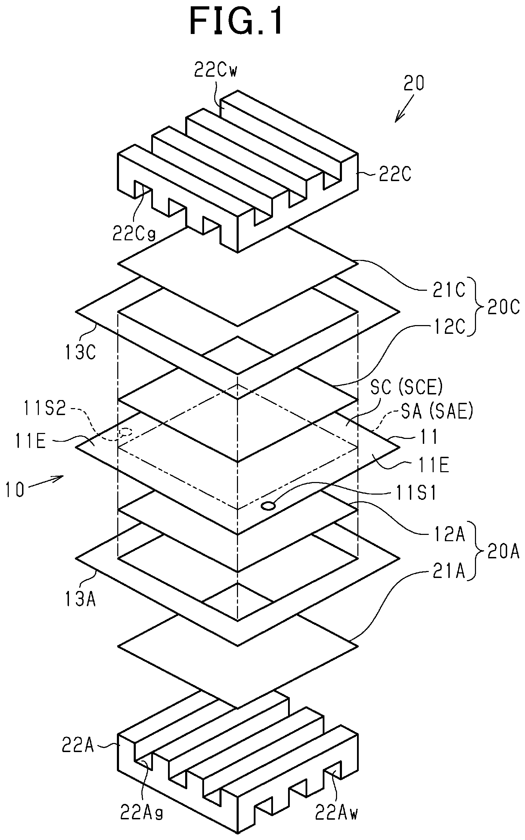

A membrane electrode assembly, a polymer electrolyte fuel cell, a method for manufacturing a membrane electrode assembly, and a method for manufacturing a polymer electrolyte fuel cell according to a first embodiment will be described with reference to Figs. 1 to 3.

### [Polymer Electrolyte Fuel Cell]

A structure of a polymer electrolyte fuel cell including a membrane electrode assembly will be described with reference to Fig. 1. The structure described below is one exemplary structure of the polymer electrolyte fuel cell. Fig. 1 illustrates a structure of a single cell included in the polymer electrolyte fuel cell. The polymer electrolyte fuel cell may include a plurality of single cells and have a structure including the plurality of single cells stacked on top of another.

As illustrated in Fig. 1, a polymer electrolyte fuel cell 20 includes a membrane electrode assembly 10, a pair of gas diffusion layers, and a pair of separators.

The membrane electrode assembly 10 includes an electrolyte layer 11, a cathode catalyst layer 12C, and an anode catalyst layer 12A. The cathode catalyst layer 12C includes particles carrying a catalyst metal, and is positioned on a cathode surface SC of the electrolyte layer 11. The cathode catalyst layer 12C is one example of the first catalyst layer. The cathode surface SC is one example of the first surface.

The membrane electrode assembly 10 includes a first symbol 11S1. The first symbol 11S1 is a symbol containing therein encoded information required for manufacture of the cathode catalyst layer 12C. The information required for manufacture of the cathode catalyst layer 12C is one example of the information required for manufacture of the membrane electrode assembly 10. The information required for manufacture of the cathode catalyst layer 12C includes at least one of, for example, a manufacturer, a manufacture date, a manufacturing place, a manufacturing line, manufacture conditions, and a raw material. That is, the information required for manufacture of the cathode catalyst layer 12C may include only any one of, for example, a manufacturer, a manufacture date, a manufacturing place, a manufacturing line, manufacturing conditions, and a raw material, or may include any two or more thereof. The first symbol 11S1 is a discolored laser trace in the electrolyte layer 11, and is disposed in an edge SCE of the cathode surface SC where the cathode catalyst layer 12C is not positioned.

In the membrane electrode assembly 10 according to the present disclosure, the first symbol 11S1 containing therein encoded information required for manufacture of the membrane electrode assembly 10 is disposed in a part of the cathode surface SC of the electrolyte layer 11 where the cathode catalyst layer 12C is not positioned. The part of the cathode surface SC where the cathode catalyst layer 12C is positioned is directly involved in a cell reaction during use of a fuel cell and is covered with the cathode catalyst layer 12C having a black-based color caused by colored materials such as catalyst metals. The edge SCE of the cathode surface SC where the cathode catalyst layer 12C is not positioned is not directly involved in a cell reaction, and is not covered with the cathode catalyst layer 12C having a black-based color and is thus colorless transparent or colored transparent. The first symbol 11S1 that is a discolored laser trace in the electrolyte layer 11 is not directly involved in a cell reaction and therefore maintains color contrast required for decoding, enabling decoding of the information after use of a fuel cell.

The electrolyte layer 11 is colorless transparent or colored transparent, and is preferably colorless transparent. The first symbol 11S1 is, for example, white. The first symbol 11S1 may include at least one of, for example, a number, a barcode, and a two-dimensional code. That is, the first symbol 11S1 may include only any one of a number, a barcode, and a two-dimensional code, or may include two or more thereof.

The first symbol 11S1 is formed by applying, to the electrolyte layer 11, laser light to which the electrolyte layer 11 has reactivity. The first symbol 11S1 is formed in one part of the electrolyte layer 11, for example, by applying, to the electrolyte layer 11, laser light oscillated from a carbon dioxide laser.

The anode catalyst layer 12A includes particles carrying a catalyst metal, and is positioned on an anode surface SA opposite to the cathode surface SC of the electrolyte layer 11. The anode catalyst layer 12A is one example of the second catalyst layer. The anode surface SA is one example of the second surface. The catalyst metal carried by the particles included in the anode catalyst layer 12A may be the same metal as or a different metal from the catalyst metal carried by the particles included in the cathode catalyst layer 12C.

The membrane electrode assembly 10 includes a second symbol 11S2. The second symbol 11S2 is a symbol containing therein encoded information required for manufacture of the anode catalyst layer 12A. The information required for manufacture of the anode catalyst layer 12A is one example of the information required for manufacture of the membrane electrode assembly 10. The information required for manufacture of the anode catalyst layer 12A includes at least one of, for example, a manufacturer, a manufacture date, a manufacturing place, a manufacturing line, manufacture conditions, and a raw material. That is, the information required for manufacture of the anode catalyst layer 12A may include only any one of, for example, a manufacturer, a manufacture date, a manufacturing place, a manufacturing line, manufacturing conditions, and a raw material, or may include any two or more thereof. The encoded information in the second symbol 11S2 may relate to the same item(s) as or a different item(s) from the encoded information in the first symbol 11S1.

The second symbol 11S2 is a discolored laser trace in the electrolyte layer 11, and is disposed at a position other than a position opposite to the first symbol 11S1, in an edge SAE of the anode surface SA where the anode catalyst layer 12A is not positioned. Therefore, in the view from a viewpoint facing the anode surface SA, the second symbol 11S2 does not overlap the first symbol 11S1.

In the membrane electrode assembly 10 according to the present embodiment, the information required for manufacture of the cathode catalyst layer 12C is decoded from the first symbol 11S1, and the information required for manufacture of the anode catalyst layer 12A is decoded from the second symbol 11S2. Since the second symbol 11S2 is not positioned opposite to the first symbol 11S1, the decoding accuracy of the information required for manufacture of the cathode catalyst layer 12C and the decoding accuracy of the information required for manufacture of the anode catalyst layer 12A are increased, compared to the arrangement in which the two symbols 11S1, 11S2 are opposite to each other.

The second symbol 11S2 is, for example, white. The second symbol 11S2 may have an identical color with or a different color from the first symbol 11S1. The second symbol 11S2 includes at least one of, for example, a number, a barcode, and a two-dimensional code. That is, the first symbol 11S1 may include only any one of a number, a barcode, and a two-dimensional code, or may include two or more thereof.

The second symbol 11S2 is formed by applying, to the electrolyte layer 11, laser light to which the electrolyte layer 11 has reactivity. The second symbol 11S2 is formed in one part of the electrolyte layer 11, for example, by applying, to the electrolyte layer 11, laser light oscillated from a carbon dioxide laser.

The electrolyte layer 11 includes two end portions 11E that are parallel with each other. Since the electrolyte layer 11 has a quadrangular shape, the outer shape of the electrolyte layer 11 is formed of two side groups. Each of the side groups is formed of two sides that are parallel with each other. A first end portion 11E has a shape extending along a first side included in one side group. A second end portion 11E has a shape extending along a second side included in the one side group. The first symbol 11S1 and the second symbol 11S2 are disposed separately at the end portions 11E.

The pair of gas diffusion layers are formed of a cathode gas diffusion layer 21C and an anode gas diffusion layer 21A. The pair of separators are formed of a cathode separator 22C and an anode separator 22A.

The cathode gas diffusion layer 21C is in contact with the cathode catalyst layer 12C. The cathode catalyst layer 12C and the cathode gas diffusion layer 21C form an air electrode (cathode) 20C. The anode gas diffusion layer 21A is in contact with the anode catalyst layer 12A. The anode catalyst layer 12A and the anode gas diffusion layer 21A form a fuel electrode (anode) 20A.

The membrane electrode assembly 10 includes a pair of gaskets 13A, 13C. Each of the gaskets 13A, 13C is colorless transparent or colored transparent, and is preferably colorless transparent. The cathode gasket 13C is in contact with the edge SCE of the cathode surface SC where the cathode catalyst layer 12C is not positioned. The first symbol 11S1 is disposed so as to be covered with the cathode gasket 13C positioned in the edge SCE. The anode gasket 13A is in contact with the edge SAE of the anode surface SA where the anode catalyst layer 12A is not positioned. The second symbol 11S2 is disposed so as to be covered with the anode gasket 13A positioned in the edge SAE. The gaskets 13A, 13C have quadrangular frame shapes respectively surrounding the catalyst layers 12A, 12C. Since the symbols 11S1, 11S2 are covered with the gaskets 13A, 13C respectively in contact with the surfaces SA, SC, the robustness of the information on manufacture of the membrane electrode assembly 10 is increased.

The cathode separator 22C and the anode separator 22A sandwich, in the thickness direction of the polymer electrolyte fuel cell 20, a multilayer formed of the membrane electrode assembly 10 and the two gas diffusion layers 21A, 21C. The cathode separator 22C faces the cathode gas diffusion layer 21C. The anode separator 22A faces the anode gas diffusion layer 21A.

A pair of surfaces of the cathode separator 22C that face each other each have a plurality of grooves. The grooves included in a facing surface of the pair of surfaces that faces the cathode gas diffusion layer 21C are gas channels 22Cg. The grooves included in the surface opposite to the facing surface of the pair of surfaces are cooling water channels 22Cw. A pair of surfaces of the anode separator 22A that face each other each have a plurality of grooves. The grooves included in a facing surface of the pair of surfaces that faces the anode gas diffusion layer 21A are gas channels 22Ag. The grooves included in the surface opposite to the facing surface of the pair of surfaces are cooling water channels 22Aw. The separators 22A, 22C are formed of a material that has electric conductivity and a low permeability to gas.

In the polymer electrolyte fuel cell 20, an oxidant gas is supplied through the gas channels 22Cg of the cathode separator 22C to the air electrode 20C. A fuel gas is supplied through the gas channels 22Ag of the anode separator 22A to the fuel electrode 20A. Thereby, the polymer electrolyte fuel cell 20 generates power. As the oxidant gas, for example, air and oxygen gas can be used. As the fuel gas, for example, hydrogen gas can be used.

### [Membrane electrode assembly]

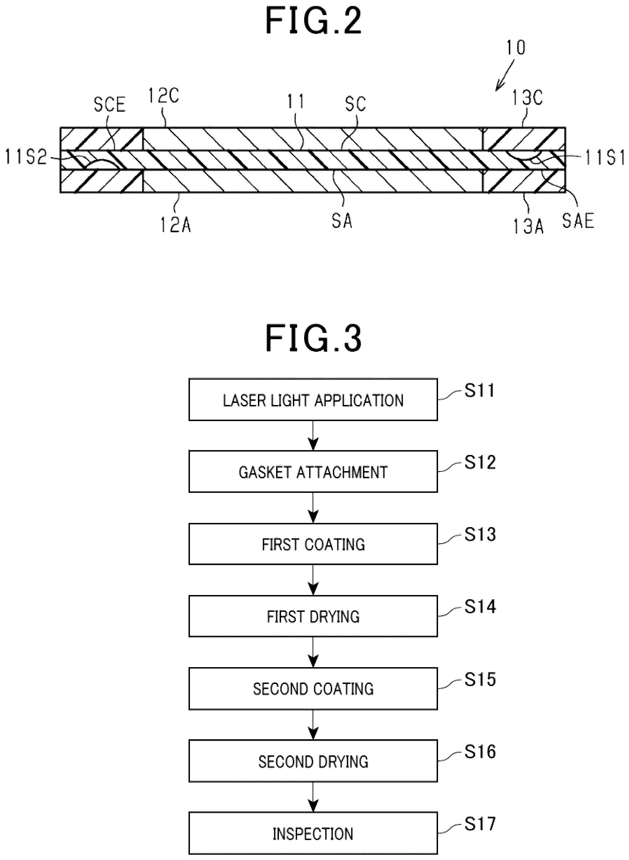

Fig. 2 illustrates a cross-sectional structure of the membrane electrode assembly 10 along the thickness direction of the electrolyte layer 11. The cross-sectional structure illustrated in Fig. 2 is a structure of a cross-section perpendicular to the electrolyte layer 11 and along a surface including the first symbol 11S1 and the second symbol 11S2.

As illustrated in Fig. 2, the cathode surface SC and the anode surface SA of the electrolyte layer 11 face each other. The cathode catalyst layer 12C is positioned in a part except for the edge SCE of the cathode surface SC. The cathode gasket 13C is positioned in the edge SCE of the cathode surface SC. The anode catalyst layer 12A is positioned in a part except for the edge SAE of the anode surface SA. The anode gasket 13Ais positioned in the edge SAE of the anode surface SA.

The first symbol 11S1 is positioned in one part of the edge SCE of the cathode surface SC. The first symbol 11S1 has a length that reaches partway through the thickness of the electrolyte layer 11 in the direction from the cathode surface SC toward the anode surface SA. That is, the electrolyte layer 11 is modified by application of laser light and thereby discolored to partway through the thickness of the electrolyte layer 11 along the direction from the cathode surface SC toward the anode surface SA. Since the first symbol 11S1 has a length that reaches partway through the thickness of the electrolyte layer 11 in the direction from the cathode surface SC toward the anode surface SA, the robustness of the first symbol 11S1 is increased, compared to when the first symbol 11S1 is positioned only on the cathode surface SC. For example, even when the cathode surface SC is abraded, the first symbol 11S1 is less likely to be lost.

In other words, the first symbol 11S1 has a depth that does not penetrate the electrolyte layer 11. That is, the first symbol 11S1 does not have a depth that extends entirely through the electrolyte layer 11 in the thickness direction of the electrolyte layer 11. The maximum value of depth of the first symbol 11S1 may be 3 µm or more. The variation in depth of the first symbol 11S1 is 5% or less with respect to the maximum value. In other words, for example, when the maximum value of the first symbol 11S1 is 3 µm, the thickness at locations of the first symbol 11S1 is included in the range of 2.85 µm or more and 3 µm or less. The average value of thickness of the electrolyte layer 11 may be 4.5 µm or more. When the maximum value of depth of the first symbol 11S1 is 3 µm or more, it is possible to increase the reliability of retaining the first symbol 11S1 even when the cathode surface SC of the electrolyte layer 11 is abraded.

The maximum value of depth of the first symbol 11S1 may be 2/3 or less the average value of thickness of the electrolyte layer 11. In this case, even when the gaskets 13A, 13C are removed from the electrolyte layer 11 in disassembly of the membrane electrode assembly 10, the electrolyte layer 11 is inhibited from damaging the first symbol 11S1.

The second symbol 11S2 is positioned in one part of the edge SAE of the anode surface SA. The second symbol 11S2 has a length that reaches partway through the thickness of the electrolyte layer 11 in the direction from the anode surface SA toward the cathode surface SC. That is, the electrolyte layer 11 is modified by application of laser light and thereby discolored to partway through the thickness of the electrolyte layer 11 along the direction from the anode surface SA toward the cathode surface SC. Since the second symbol 11S2 has a length that reaches partway through the thickness of the electrolyte layer 11 in the direction from the anode surface SA toward the cathode surface SC, the robustness of the second symbol 11S2 is increased, compared to when the second symbol 11S2 is positioned only on the anode surface SA. For example, even when the anode surface SA is abraded, the second symbol 11S2 is less likely to be lost.

In other words, the second symbol 11S2 has a depth that does not penetrate the electrolyte layer 11. The maximum value of depth of the second symbol 11S2 may be 3 µm or more. The variation in depth of the second symbol 11S2 is 5% or less with respect to the maximum value. In other words, for example, when the maximum value of the second symbol 11S2 is 3 µm, the thickness at locations of the second symbol 11S2 is included in the range of 2.85 µm or more and 3 µm or less. The average value of thickness of the electrolyte layer 11 may be 4.5 µm or more. When the maximum value of depth of the second symbol 11S2 is 3 µm or more, it is possible to increase the reliability of retaining the second symbol 11S2 even when the anode surface SA of the electrolyte layer 11 is abraded.

The maximum value of depth of the second symbol 11S2 may be 2/3 or less the average value of thickness of the electrolyte layer 11. In this case, even when the gaskets 13A, 13C are removed from the electrolyte layer 11 in disassembly of the membrane electrode assembly 10, the electrolyte layer 11 is inhibited from damaging the second symbol 11S2.

When the membrane electrode assembly 10 used is discarded, the gaskets 13A, 13C are removed from the electrolyte layer 11 to disassemble the membrane electrode assembly 10. When the electrolyte layer 11 is damaged by the outer force acted on the electrolyte layer 11 in the removal of the gaskets 13A, 13C, the electrolyte layer 11 is divided into a part removed from the gaskets 13A, 13C, and a part attached to the gaskets 13A, 13C. Thus, it is necessary to remove, from the gaskets 13A, 13C, the part of the electrolyte layer 11 that is attached to the gaskets 13A, 13C, and the man-hours necessary for dividing the membrane electrode assembly 10 are increased.

In this respect, when the maximum value of depth of the symbols 11S1, 11S2 is 2/3 or less the average value of thickness of the electrolyte layer 11, the electrolyte layer 11 is inhibited from being damaged during removal of the gaskets 13A, 13C, resulting in facilitating the disassembly of the membrane electrode assembly 10.

The electrolyte layer 11 is whitened by the operation of the polymer electrolyte fuel cell including the membrane electrode assembly 10. This whitening makes it difficult to read the symbols 11S1, 11S2, compared to before the whitening of the electrolyte layer 11. The operation of the polymer electrolyte fuel cell swells the electrolyte layer 11, but not the gaskets 13A, 13C, and therefore the gaskets 13A, 13C are detached from the electrolyte layer 11. Thus, when an image of the membrane electrode assembly 10 is taken, it is difficult to read the symbols 11S1, 11S2 due to generation of streaks caused by the detachment of the gaskets 13A, 13C. In this respect, since the symbols 11S1, 11S2 each have a prescribed depth, it is easy to find, even after the whitening of the electrolyte layer 11 and the detachment of the gaskets 13A, 13C, the focal positions in the symbols 11S1, 11S2 when images of the symbols 11S1, 11S2 are taken.

### [Method for manufacturing membrane electrode assembly]

A method for manufacturing a membrane electrode assembly 10 will be described with reference to Fig. 3. The method, according to the present embodiment, for manufacturing a membrane electrode assembly 10 is a manufacturing method performed by single wafer processing. That is, in the manufacturing method, membrane electrode assemblies 10 are manufactured one by one.

The method for manufacturing a membrane electrode assembly 10 includes forming, on a cathode surface SC of an electrolyte layer 11, a cathode catalyst layer 12C including particles carrying a catalyst metal. The method for manufacturing a membrane electrode assembly 10 includes forming a first symbol 11S1 containing therein encoded information required for manufacture of the cathode catalyst layer 12C, in an edge SCE of the cathode surface SC where the cathode catalyst layer 12C is not positioned, by applying laser light to the edge SCE. Hereinafter, the method for manufacturing a membrane electrode assembly 10 will be described in more detail with reference to the drawing.

As illustrated in Fig. 3, the method for manufacturing a membrane electrode assembly 10 includes a laser light applying step (step S11), a gasket attaching step (step S12), a first coating step (step S13), a first drying step (step S14), a second coating step (step S15), a second drying step (step S16), and an inspection step (step S17).

In the laser light applying step, a first symbol 11S1 and a second symbol 11S2 are formed in an electrolyte layer 11 by applying laser light to the electrolyte layer 11. In this formation, the laser light is applied to either one of the cathode surface SC or the anode surface SA of the electrolyte layer 11, and then to the other, the surfaces SC and SA facing each other.

When the laser light is applied to the cathode surface SC, the electrolyte layer 11 and an application port are opposed so that the distance between the cathode surface SC and the laser light application port is shorter than the distance between the anode surface SA and the laser light application port. Then, by applying the laser light from the application port toward the cathode surface SC, the first symbol 11S1 is formed that is positioned on the cathode surface SC and extends partway through in the thickness direction of the electrolyte layer 11. In this formation, the laser light is applied to the cathode surface SC in a pattern corresponding to a shape required of the first symbol 11S1. For the application of the laser light, a carbon dioxide laser is used.

When the laser light is applied to the anode surface SA, the electrolyte layer 11 and the application port are opposed so that the distance between the anode surface SA and the laser light application port is shorter than the distance between the cathode surface SC and the laser light application port. Then, by applying the laser light from the application port toward the anode surface SA, the second symbol 11S2 is formed that is positioned on the anode surface SA and extends partway through in the thickness direction of the electrolyte layer 11. In this formation, the laser light is applied to the anode surface SA in a pattern corresponding to a shape required of the second symbol 11S2. For the application of the laser light, a carbon dioxide laser is used.

In the gasket attaching step, gaskets 13A, 13C are attached to the electrolyte layer 11 having the two symbols 11S1, 11S2 formed therein. In this attachment, either one of the cathode gasket 13C or the anode gasket 13A is attached to the electrolyte layer 11, and then the other is attached to the electrolyte layer 11.

In the attachment of the cathode gasket 13C to the electrolyte layer 11, the cathode gasket 13C is attached to the electrolyte layer 11 so as to cover an edge SCE of the cathode surface SC and thereby cover the first symbol 11S1 positioned in the edge SCE. In the attachment of the anode gasket 13A to the electrolyte layer 11, the anode gasket 13A is attached to the electrolyte layer 11 so as to cover an edge SAE of the anode surface SA and thereby cover the second symbol 11S2 positioned in the edge SAE.

In the first coating step, a laminate of the electrolyte layer 11 and the gaskets 13A, 13C is coated with a slurry for forming a catalyst layer. In the first coating step, for example, the cathode surface SC is coated with a slurry for forming a cathode catalyst layer 12C. In this coating, an area of the cathode surface SC that is surrounded by the cathode gasket 13C is coated with the slurry, and a coating film is thereby formed.

In the first drying step, the coating film formed from the slurry for forming a cathode catalyst layer 12C is dried. Thereby, a cathode catalyst layer 12C is formed in a part of the cathode surface SC, other than the edge SCE that is an area covered with the cathode gasket 13C.

In the second coating step, the anode surface SA of the electrolyte layer 11 having the cathode catalyst layer 12C formed thereon is coated with a slurry for forming an anode catalyst layer 12A. In this coating, an area of the anode surface SA that is surrounded by the anode gasket 13A is coated with the slurry, and a coating film is thereby formed.

In the second drying step, the coating film formed from the slurry for forming an anode catalyst layer 12A is dried. Thereby, an anode catalyst layer 12A is formed in a part of the anode surface SA, other than the edge SAE that is an area covered with the anode gasket 13A. As a result, a membrane electrode assembly 10 including the electrolyte layer 11, the cathode catalyst layer 12C, the anode catalyst layer 12A, the cathode gasket 13C, and the anode gasket 13A can be obtained.

Meanwhile, the cathode surface SC may be coated with the slurry for forming a cathode catalyst layer 12C in the second coating step after the anode surface SA is coated with the slurry for forming an anode catalyst layer 12A in the first coating step. In this case, the coating film formed from the slurry for forming an anode catalyst layer 12A is dried in the first drying step, and the coating film formed from the slurry for forming a cathode catalyst layer 12C is dried in the second drying step.

In the inspection step, the first symbol 11S1 and the second symbol 11S2 are inspected. In the inspection step, for example, the first symbol 11S1 is inspected and then the second symbol 11S2 is inspected. In the inspection of the first symbol 11S1, the first symbol 11S1 is inspected while the laminate including the electrolyte layer 11 is conveyed in the conveyance direction along an end portion 11E of the electrolyte layer 11. In the inspection of the first symbol 11S1, an image including the first symbol 11S1 is obtained by imaging the first symbol 11S1 with an inspection device including an imaging unit. Next, it is determined on the basis of the image obtained whether the first symbol 11S1 can be decoded.

Next, the second symbol 11S2 is inspected. In the inspection of the second symbol 11S2, the second symbol 11S2 is inspected while the laminate including the electrolyte layer 11 is conveyed in the same conveyance direction as in the inspection of the first symbol 11S1. In the inspection of the second symbol 11S2, an image including the second symbol 11S2 is obtained by imaging the second symbol 11S2 with an inspection device including an imaging unit. Next, it is determined on the basis of the image obtained whether the second symbol 11S2 can be decoded.

In the membrane electrode assembly 10 according to the present embodiment, since the first symbol 11S1 and the second symbol 11S2 are disposed at two end portions 11E that are parallel with each other, the conveyance of the laminate in the conveyance direction toward an inspection device enables the inspection of the symbols 11S1, 11S2. This configuration reduces the burden of changing the arrangement of an inspection device or increasing the number of inspection devices in the inspection of the symbols 11S1, 11S2.

Meanwhile, in the inspection step, the first symbol 11S1 may be inspected after the second symbol 11S2 is inspected. Also in this case, the membrane electrode assembly 10 according to the present embodiment can provide the effects described above.

### [Materials]

Hereinafter, materials constituting the membrane electrode assembly 10 will be described.

The electrolyte layer **11** contains a polyelectrolyte. The polyelectrolyte may be any polyelectrolyte as long as it has proton conductivity, and may be, for example, a fluorine-based polyelectrolyte or a hydrocarbon-based polyelectrolyte. The fluorine-based polyelectrolyte is, for example, a polyelectrolyte having a tetrafluoroethylene backbone, and examples of the polyelectrolyte include Nafion (registered trade name, manufactured by The Chemours Company). Examples of the hydrocarbon-based polyelectrolyte include a sulfonated polyether ketone, a sulfonated polyether sulfone, a sulfonated polyether ether sulfone, a sulfonated polysulfide, and a sulfonated polyphenylene.

The average value of thickness of the electrolyte layer **11** is preferably 1 µm or more and 500 µm or less, more preferably 3 µm or more and 200 µm or less, further preferably 5 µm or more and 100 µm or less.

The gaskets 13A, 13C are formed of, for example, a fluorine-based resin, polyethylene terephthalate, polyethylene naphthalate, syndiotactic polystyrene, polytetrafluoroethylene, or a polyimide. The fluorine-based resin may be, for example, an ethylene tetrafluoroethylene copolymer (ETFE), a tetrafluoroethylene-hexafluoropropylene copolymer (FEP), a tetrafluoroperfluoroalkyl vinyl ether copolymer (PFA), or polytetrafluoroethylene (PTFE). From the viewpoint of enabling formation of a laser trace with an ultraviolet laser, the gaskets 13A, 13C are preferably formed of polyethylene naphthalate.

The average value of thickness of the gaskets 13A, 13C is preferably 1 µm or more and 500 µm or less, more preferably 3 µm or more and 200 µm or less, further preferably 5 µm or more and 100 µm or less.

The catalyst layers 12A, 12C include a catalyst metal, an electrically conductive carrier, and a polyelectrolyte. The catalyst metal may be a platinum group metal or a metal other than platinum group metals. The platinum group metals include platinum, palladium, ruthenium, iridium, rhodium, and osmium. The metals other than platinum group metals include iron, lead, copper, chromium, cobalt, nickel, manganese, vanadium, molybdenum, gallium, and aluminum. The catalyst metal may be an alloy, an oxide, a multiple oxide, or the like of these metals. The catalyst metal is preferably platinum or a platinum alloy.

The electrically conductive carrier may be, for example, carbon particles or carbon fibers. The catalyst layers 12A, 12C may include, as the electrically conductive carrier, both carbon particles and carbon fibers. The carbon particles may be any type of particles as long as they have electric conductivity and are not eroded by the catalyst metal. The carbon particles may be, for example, carbon black, graphite, black lead, activated carbon, or a fullerene. The carbon black may be acetylene black, furnace black, ketjen black, or the like. The carbon fibers may be, for example, carbon nanotubes or carbon nanofibers. As the carbon fibers, various grades of VGCF (manufactured by Showa Denko K.K., registered trade name) can be used.

The polyelectrolyte may be a polymer electrolyte having proton conductivity. In order to increase adhesiveness between the catalyst layers 12A, 12C and the electrolyte layer 11, the polyelectrolyte is preferably the same electrolyte as or a similar electrolyte to the electrolyte layer 11. The polyelectrolyte may be, for example, a fluorine-based resin or a hydrocarbon-based resin. The fluorine-based resin may be, for example, Nafion. The hydrocarbon-based resin may be, for example, a sulfonated polyether ketone, a sulfonated polyether sulfone, a sulfonated polyether ether sulfone, a sulfonated polysulfide, or a sulfonated polyphenylene.

The catalyst layers 12A, 12C may include a fibrous material. The fibrous material may be electron-conductive fibers or proton-conductive fibers. The electron-conductive fibers may be carbon fibers, carbon nanotubes, carbon nanohorns, electrically conductive polymer nanofibers, or the like.

The proton-conductive fibers may be any type of fibers as long as they are obtained by processing a polyelectrolyte having proton conductivity into fibers. A material for forming the proton-conductive fibers may be a fluorine-based polyelectrolyte, a hydrocarbon-based polyelectrolyte, or the like. The fluorine-based polyelectrolyte may be, for example, Nafion manufactured by The Chemours Company, Flemion (registered trade name, manufactured by Asahi Glass Co., Ltd.), Aciplex (registered trade name, manufactured by Asahi Kasei Corporation), or Gore-Select (registered trade name, manufactured by W. L. Gore & Associates, Inc.). The hydrocarbon-based polyelectrolyte may be a sulfonated polyether ketone, a sulfonated polyether sulfone, a sulfonated polyether ether sulfone, a sulfonated polysulfide, a sulfonated polyphenylene, or the like.

When the catalyst layers 12A, 12C are formed, a slurry is adjusted by dispersing or dissolving a catalyst metal, an electrically conductive carrier, and a polyelectrolyte in a solvent. The slurry may contain a fibrous material. The solvent may be, for example, a liquid in which the polyelectrolyte can be dispersed or a liquid in which the polyelectrolyte can be dissolved. The solvent may be water, an alcohol, a ketone, an ether, a sulfoxide, an amide, or the like. The alcohol may be methanol, ethanol, 1-propanol, 2-propanol, 1-butanol, 2-butanol, 3-butanol, pentanol, ethylene glycol, diacetone alcohol, 1-methoxy-2-proppanol, or the like. The ketone may be acetone, methyl ethyl ketone, pentanone, methyl isobutyl ketone, diisobutyl ketone, or the like. The ether may be dioxane, tetrahydrofuran, or the like. The sulfoxide may be dimethylsulfoxide or the like. The amide may be dimethylformamide, dimethylacetamide, or the like.

As described above, the membrane electrode assembly, the polymer electrolyte fuel cell, the method for manufacturing a membrane electrode assembly, and the method for manufacturing a polymer electrolyte fuel cell according to the first embodiment can provide the effects described below.

(1-1) The first symbol 11S1 that is a discolored laser trace in the electrolyte layer 11 is not directly involved in a cell reaction and therefore maintains color contrast required for decoding, enabling decoding of the information after use of a fuel cell.

(1-2) Since the second symbol 11S2 is not positioned opposite to the first symbol 11S1, the decoding accuracy of the information required for manufacture of the cathode catalyst layer 12C and the decoding accuracy of the information required for manufacture of the anode catalyst layer 12A are increased.

(1-3) Since the symbols 11S1, 11S2 are covered with the gaskets 13A, 13C respectively in contact with the surfaces SA, SC, the robustness of the information on manufacture of the membrane electrode assembly 10 is increased.

(1-4) The burden of changing the arrangement of an inspection device or increasing the number of inspection devices is reduced in the inspection of the symbols 11S1, 11S2.

### [Modification examples of first embodiment]

The first embodiment described above can be implemented with the following modifications.

### [Inspection step]

- In the method for manufacturing a membrane electrode assembly 10, the timing of the inspection step is not limited to after the completion of formation of the cathode catalyst layer 12C and the anode catalyst layer 12A, but the inspection step may be performed at any timing after the formation of the symbols 11S1, 11S2.

### [Method for manufacturing membrane electrode assembly]

- The method for manufacturing a membrane electrode assembly 10 can be changed as follows.

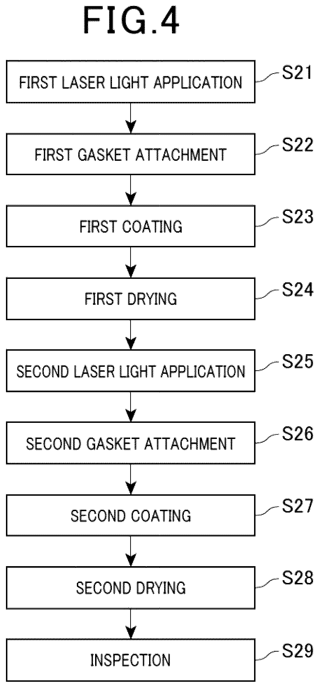

As illustrated in Fig. 4, the method for manufacturing a membrane electrode assembly 10 includes a first laser light applying step (step S21), a first gasket attaching step (step S22), a first coating step (step S23), and a first drying step (step S24). The method for manufacturing a membrane electrode assembly 10 also includes a second laser light applying step (step S25), a second gasket attaching step (step S26), a second coating step (step S27), a second drying step (step S28), and an inspection step (step S29).

The first laser light applying step, the first gasket attaching step, and the first coating step are performed on either one of the cathode surface SC or the anode surface SA. Next, the second laser light applying step, the second gasket attaching step, and the second coating step are performed on the other of the cathode surface SC and the anode surface SA on which the steps from the first laser light applying step to the first coating step have not been performed.

As described above, the present modification example is different from the first embodiment described above in that, after the completion of treatments performed on either one of the cathode surface SC or the anode surface SA, the other surface is treated.

### [Symbols]

- The first symbol 11S1 and the second symbol 11S2 may be positioned at one end portion 11E of the electrolyte layer 11. This case can also provide an effect equivalent to the case in which the end portion 11E where the first symbol 11S1 is positioned is parallel with the end portion 11E where the second symbol 11S2 is positioned.
- The end portion 11E where the first symbol 11S1 is positioned may be perpendicular to the end portion 11E where the second symbol 11S2 is positioned.
- As long as the first symbol 11S1 and the second symbol 11S2 can individually be detected, the second symbol 11S2 may be disposed at a site in the edge SAE of the anode surface SA that is opposite to the first symbol 11S1.
- The membrane electrode assembly 10 may include a plurality of first symbols 11S1 positioned on the cathode surface SC, and may include a plurality of second symbols 11S2 positioned on the anode surface SA.
- The membrane electrode assembly 10 includes a symbol positioned on the cathode surface SC, but need not include a symbol positioned on the anode surface SA. In this case, the symbol positioned on the cathode surface SC is preferably a symbol containing therein, as the information required for manufacture of the membrane electrode assembly 10, encoded information required for both manufacture of the cathode catalyst layer 12C and manufacture of the anode catalyst layer 12A.

The membrane electrode assembly 10 includes a symbol positioned on the anode surface SA, but need not include a symbol positioned on the cathode surface SC. In this case, the symbol positioned on the anode surface SA is preferably a symbol containing therein, as the information required for manufacture of the membrane electrode assembly 10, encoded information required for both manufacture of the anode catalyst layer 12A and manufacture of the cathode catalyst layer 12C.

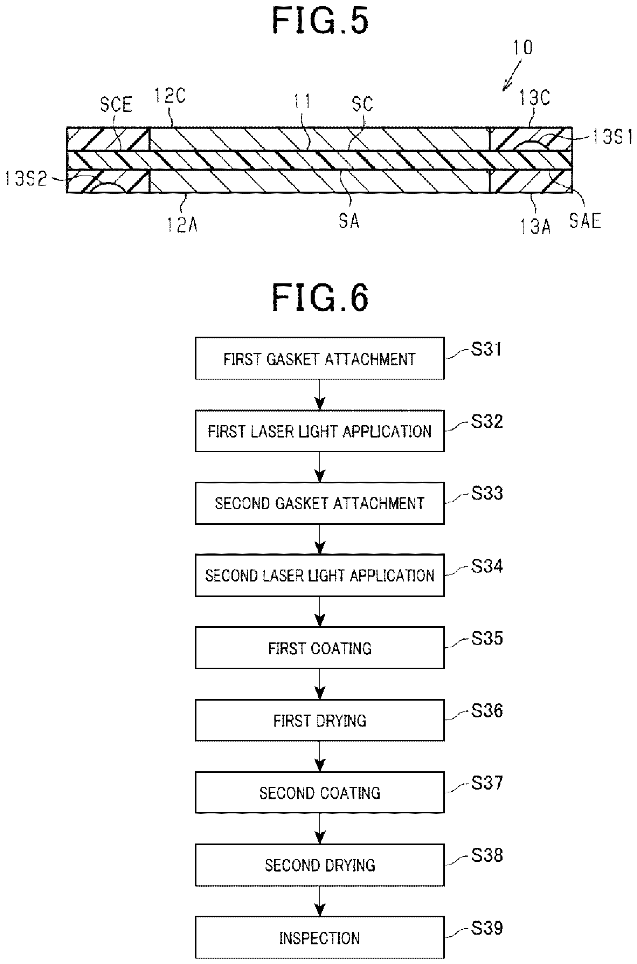

- A membrane electrode assembly 10 including a symbol formed in a gasket will be described with reference to Figs. 5 and 6. The difference between the membrane electrode assembly 10 according to the first embodiment and the membrane electrode assembly 10 according to the present modification example is the position where a symbol is formed. The membrane electrode assembly 10 according to the present modification example has, in parts other than these differences, a common structure with the membrane electrode assembly 10 according to the first embodiment. Therefore, in the following, the structure of the membrane electrode assembly 10 according to the present modification example that is common with the structure of the membrane electrode assembly 10 according to the first embodiment is assigned the identical symbol to omit the detailed description of the structure.

Fig. 5 illustrates a cross-sectional structure of a membrane electrode assembly 10.

As illustrated in Fig. 5, the membrane electrode assembly 10 includes two symbols 13S1, 13S2. The first symbol 13S1 is a discolored laser trace in a cathode gasket 13C. The first symbol 13S1 is positioned on a first surface of the cathode gasket 13C that faces an electrolyte layer 11. The first symbol 13S1 extends, in the thickness direction of the cathode gasket 13C, partway through from the first surface facing a cathode surface SC toward a second surface opposite to the first surface.

The maximum value of depth of the first symbol 13S1 may be 2/3 or less the average value of thickness of the cathode gasket 13C. In this case, even when the cathode gasket 13C is removed from the electrolyte layer 11 in disassembly of the membrane electrode assembly 10, the cathode gasket 13C is inhibited from damaging the first symbol 13S1.

The second symbol 13S2 is a discolored laser trace in an anode gasket 13A. The second symbol 13S2 is positioned on a second surface of the anode gasket 13A that is opposite to a first surface thereof in contact with the electrolyte layer 11. The second symbol 13S2 extends partway through from the second surface toward the first surface in the thickness direction of the anode gasket 13A.

The second symbol 13S2 has a depth that does not penetrate the anode gasket 13A. The maximum value of depth of the second symbol 13S2 may be 3 µm or more. The variation in depth of the second symbol 11S2 is 5% or less with respect to the maximum value. In other words, for example, when the maximum value of the second symbol 11S2 is 3 µm, the thickness at locations of the second symbol 11S2 is included in the range of 2.85 µm or more and 3 µm or less. The average value of thickness of the anode gasket 13A may be 20 µm or more. When the maximum value of depth of the second symbol 13S2 is 3 µm, it is possible to increase the reliability of retaining the second symbol 13S2 even when the second surface of the anode gasket 13A is abraded.

The maximum value of depth of the second symbol 13S2 may be 2/3 or less the average value of thickness of the anode gasket 13A. In this case, even when the anode gasket 13A is removed from the electrolyte layer 11 in disassembly of the membrane electrode assembly 10, the anode gasket 13A is inhibited from damaging the second symbol 13S2.

A method, according to the present modification example, for manufacturing a membrane electrode assembly 10 includes forming a first symbol 13S1 containing therein encoded information required for manufacture of the membrane electrode assembly 10, in a cathode gasket 13C in contact with an edge SCE of a cathode surface SC where a cathode catalyst layer 12C is not positioned, by applying laser light to the cathode gasket 13C. Hereinafter, the method for manufacturing a membrane electrode assembly 10 will be described in more detail with reference to Fig. 6.

Fig. 6 is a flow chart for describing the method, according to the present modification example, for manufacturing a membrane electrode assembly 10.

As illustrated in Fig. 6, the method for manufacturing a membrane electrode assembly 10 includes a first gasket attaching step (step S31), a first laser light applying step (step S32), a second gasket attaching step (step S33), and a second laser light applying step (step S34). The method for manufacturing a membrane electrode assembly 10 includes a first coating step (step S35), a first drying step (step S36), a second coating step (step S37), a second drying step (step S38), and an inspection step (step S39).

In the first gasket attaching step, a cathode gasket 13C is attached to an electrolyte layer 11 so as to cover an edge SCE of a cathode surface SC of the electrolyte layer 11.

In the first laser light applying step, laser light is applied through the electrolyte layer 11 into the cathode gasket 13C after the cathode gasket 13C is disposed so as to be in contact with the edge SCE in the first gasket attaching step. In this application, the laser light is applied to the electrolyte layer 11 and the cathode gasket 13C with an ultraviolet laser. Thereby, a first symbol 13S1 is formed in the cathode gasket 13C.

The laser light oscillated from the ultraviolet laser is unreactive to the electrolyte layer 11 but reactive to the cathode gasket 13C. In addition, the ultraviolet laser can modify a part having the laser light applied thereto of the cathode gasket 13C even when the laser light is applied to the cathode gasket 13C via another layer covering the cathode gasket 13C. Thereby, the first symbol 13S1 that is positioned on a first surface of the cathode gasket 13C and extends partway through from the first surface toward a second surface in the thickness direction of the cathode gasket 13C can be formed in the cathode gasket 13C.

In the second gasket attaching step, an anode gasket 13A is attached to the electrolyte layer 11 so as to cover an edge SAE of an anode surface SA of the electrolyte layer 11.

In the second laser light applying step, laser light is applied to the anode gasket 13A. In this application, the laser light is applied to the anode gasket 13A with an ultraviolet laser. Thereby, a second symbol 13S2 that is positioned on a second surface of the anode gasket 13A and extends partway through from the second surface toward the first surface in the thickness direction of the anode gasket 13A can be formed in the anode gasket 13A.

**In** the steps from the first coating step to the inspection step, the identical treatments with the steps from the first coating step (step S13) to the inspection step (step S17) of the first embodiment described above are performed. Thereby, a membrane electrode assembly 10 can be obtained.

The present modification example can provide the effects described below.

(1-5) The symbol containing therein encoded information required for manufacture of the membrane electrode assembly 10 is positioned in the cathode gasket 13C disposed in the edge SCE of the cathode surface SC of the electrolyte layer 11 where the cathode catalyst layer 12C is not positioned. The part of the cathode surface SC where the cathode catalyst layer 12C is positioned is directly involved in a cell reaction during use of a fuel cell and is covered with the catalyst layer having a black-based color caused by colored material such as catalyst metals. The edge SCE of the cathode surface SC where the cathode catalyst layer 12C is not positioned is not directly involved in a cell reaction, and is not covered with the cathode catalyst layer 12C having a black-based color and is thus colorless transparent or colored transparent. The first symbol 13S1 that is a discolored laser trace in the cathode gasket 13C is not directly involved in a cell reaction and therefore maintains color contrast required for decoding, enabling decoding of the information after use of a fuel cell.

(1-6) Since the first symbol 13S1 positioned in the cathode gasket 13C is covered with the electrolyte layer 11, the robustness of the information on manufacture of the membrane electrode assembly 10 is increased.

(1-7) The first symbol 13S1 can be formed in the cathode gasket 13C by applying laser light through the electrolyte layer 11 to the cathode gasket 13C in contact with the edge SCE of the electrolyte layer 11. As a result, the first symbol 13S1 can be protected by the electrolyte layer 11 from the time of formation of the first symbol 13S1.

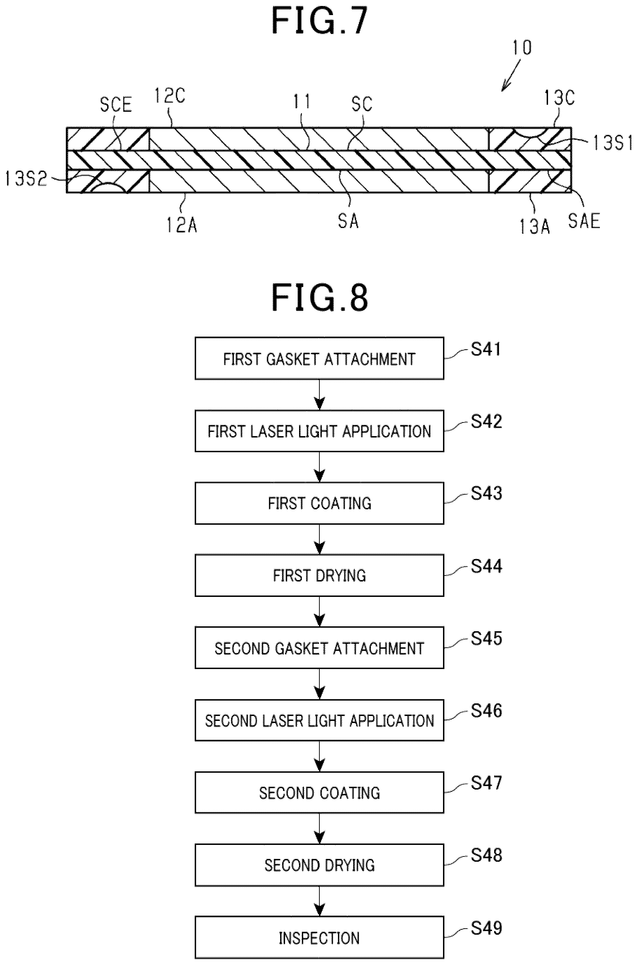

- The second symbol 13S2 may be positioned on the first surface of the anode gasket 13A, and the first symbol 13S1 may be positioned on the second surface of the cathode gasket 13C. In this case, the laser light may be applied to the anode gasket 13A via the electrolyte layer 11 in the first laser light applying step after the anode gasket 13A is attached to the electrolyte layer 11 in the first gasket attaching step. Next, the laser light may be applied to the cathode gasket 13C after the cathode gasket 13C is attached to the electrolyte layer 11 in the second gasket attaching step.
- As illustrated in Fig. 7, the first symbol 13S1 may be positioned on the second surface of the cathode gasket 13C, and the second symbol 13S2 may be positioned on the second surface of the anode gasket 13A. That is, the first symbol 13S1 may be positioned on a surface of the cathode gasket 13C that is opposite to a surface thereof in contact with the electrolyte layer 11, and the second symbol 13S2 may be positioned on a surface of the anode gasket 13A that is opposite to a surface thereof in contact with the electrolyte layer 11. In this case, the laser light may be applied to the cathode gasket 13C and the anode gasket 13A after both the cathode gasket 13C and the anode gasket 13A are attached to the electrolyte layer 11.

The first symbol 13S1 has a depth that does not penetrate the cathode gasket 13C. The maximum value of depth of the first symbol 13S1 may be 3 µm or more. The variation in depth of the first symbol 13S1 is 5% or less with respect to the maximum value. **In** other words, the thickness at locations of the first symbol 13S1 is included in the range of 2.85 µm or more and 3 µm or less. The average value of thickness of the cathode gasket 13C may be 20 µm or more. When the maximum value of depth of the first symbol 13S1 is 3 µm, it is possible to increase the reliability of retaining the first symbol 13S1 even when the second surface of the cathode gasket 13C is abraded.

Alternatively, the membrane electrode assembly 10 may be manufactured by the method illustrated in Fig. 8.

As illustrated in Fig. 8, the method for manufacturing a membrane electrode assembly 10 includes a first gasket attaching step (step S41), a first laser light applying step (step S42), a first coating step (step S43), and a first drying step (step S44). The method for manufacturing a membrane electrode assembly 10 also includes a second gasket attaching step (step S45), a second laser light applying step (step S46), a second coating step (step S47), a second drying step (step S48), and an inspection step (step S49).

The first gasket attaching step, the first laser light applying step, and the first coating step are performed on either one of the cathode surface SC or the anode surface SA. Next, the second gasket attaching step, the second laser light applying step, and the second coating step are performed on the other of the cathode surface SC and the anode surface SA on which the steps from the first laser light applying step to the first coating step have not been performed.

As described above, the present modification example is different from the method for manufacturing a membrane electrode assembly 10 described before with reference to Fig. 4 in that a treatment of applying laser light to the gaskets 13A, 13C is performed after the completion of a treatment of attaching the gaskets 13A, 13C respectively to the surfaces SA, SC of the electrolyte layer 11.

- The membrane electrode assembly 10 may include a plurality of first symbols 13S1 positioned in the cathode gasket 13C, and may include a plurality of second symbols 13S2 positioned in the anode gasket 13A.
- The membrane electrode assembly 10 includes a symbol positioned in the cathode gasket 13C, but need not include a symbol positioned in the anode gasket 13A. In this case, the symbol positioned in the cathode gasket 13C is preferably a symbol containing therein, as the information required for manufacture of the membrane electrode assembly 10, encoded information required for both manufacture of the cathode catalyst layer 12C and manufacture of the anode catalyst layer 12A.
- In the view from a viewpoint facing the plane in which the electrolyte layer 11 extends, the second symbol 13S2 may be positioned on a side of the anode gasket 13A that is parallel with a side of the cathode gasket 13C where the first symbol 13S1 is positioned. Alternatively, in the view from a viewpoint facing the plane in which the electrolyte layer 11 extends, the second symbol 13S2 may be positioned on a side of the anode gasket 13A that overlaps a side of the cathode gasket 13C where the first symbol 13S1 is positioned. These cases can provide an effect equivalent to the effect (1-4) described above.

Alternatively, in the view from a viewpoint facing the plane in which the electrolyte layer 11 extends, the second symbol 13S2 may be positioned on a side of the anode gasket 13A that is perpendicular to a side of the cathode gasket 13C where the first symbol 13S1 is positioned.

- In the manufacture of the membrane electrode assembly 10, a plurality of cathode catalyst layers 12C may be formed, with the same number of anode catalyst layers 12A as the number of cathode catalyst layers 12C, with respect to one electrolyte layer 11. In this case, first symbols 13S1 corresponding to the cathode catalyst layers 12C are respectively formed in the cathode catalyst layers 12C, and second symbols 13S2 corresponding to the anode catalyst layers 12A are respectively formed in the anode catalyst layers 12A.
- The membrane electrode assembly 10 may include a symbol positioned in the electrolyte layer 11 and a symbol positioned in the gasket 13A, 13C. For example, a symbol corresponding to the cathode catalyst layer 12C may be positioned in the electrolyte layer 11, and a symbol corresponding to the anode catalyst layer 12A may be positioned in the anode gasket 13A. Alternatively, for example, a symbol corresponding to the cathode catalyst layer 12C may be positioned in the cathode gasket 13C, and a symbol corresponding to the anode catalyst layer 12A may be positioned in the electrolyte layer 11.

Alternatively, for example, when the membrane electrode assembly 10 includes a plurality of symbols corresponding to the cathode catalyst layer 12C, the plurality of symbols may include a symbol positioned in the electrolyte layer 11 and a symbol positioned in the cathode gasket 13C. Alternatively, for example, when the membrane electrode assembly 10 includes a plurality of symbols corresponding to the anode catalyst layer 12A, the plurality of symbols may include a symbol positioned in the electrolyte layer 11 and a symbol positioned in the anode gasket 13A.

### [Gasket]

- The membrane electrode assembly 10 need not include the gaskets 13A, 13C. In this case, the membrane electrode assembly 10 may include a symbol positioned on one of a pair of surfaces of the electrolyte layer 11 that face each other.

### [Application object]

- The membrane electrode assembly 10 according to the first embodiment may be used not only as a membrane electrode assembly included in a polymer electrolyte fuel cell but also as a membrane electrode assembly included in an apparatus other than polymer electrolyte fuel cells, and may be used, for example, as a membrane electrode assembly included in a hydrogen compressor. This case can also provide effects equivalent to the effects (1-1) to (1-7) described above.

### [Test Examples 1]

Test examples will be described with reference to Tables 1 and 2.

### [Test Example 1-1]

A polyelectrolyte membrane (NafionHP, manufactured by The Chemours Company) having an average value of thickness of 12 µm was prepared as the electrolyte layer. Next, by applying laser light to a 1.5-cm square area of the first surface of the polyelectrolyte membrane with a laser (MD-U1000C, KEYENCE CORPORATION), a symbol was formed using a laser trace. In this formation, the information on manufacture of the membrane electrode assembly was encrypted as the symbol. The maximum value of depth of the symbol measured with a laser microscope was found to be 1 µm. The variation in depth of the symbol was found to be 5% or less with respect to the maximum value.

Next, a polyethylene naphthalate film (Teonex, TOYOBO Co., Ltd.) (Teonex is a registered trade name) was prepared, and then gaskets having a prescribed size were cut out from the polyethylene naphthalate film with a cutting machine (FC4200-50, Graphtec Corporation). Thereafter, the gaskets were respectively attached to the first surface and the second surface of the electrolyte layer. In this attachment, the gasket was attached to the first surface so as not to cover with the gasket the symbol positioned on the first surface.

Further, electrode catalyst layers were formed on the first and second surfaces of the electrolyte layer with a slurry formed of the following components. In this formation, coating of the first surface of the electrolyte layer with the slurry, drying of the slurry applied to the first surface, coating of the second surface of the electrolyte layer with the slurry, and drying of the slurry applied to the second surface were performed in this order. Thereby, a membrane electrode assembly of Test Example 1-1 was obtained.

- Platinum-carrying carbon (TEC10F70TPM, manufactured by Tanaka Kikinzoku Kogyo K.K.) 0.67 g
- Water 5.99 ml
- 1-Propanol 1.94 ml
- Ethanol 4.51 ml
- Electrolyte 1.62 g
- Carbon nanofiber (VGCF (registered trade name), manufactured by Resonac Holdings Corporation, fiber diameter about 150 nm, fiber length about 10 µm) 0.116 g

The symbol included in the membrane electrode assembly was read with an inspection device and was found that the information on manufacture of the membrane electrode assembly could be decoded.

### [Test Examples 1-2 to 1-11]

Membrane electrode assemblies of Test Examples 1-2 to 1-11 were obtained by the same method as in Test Example 1-1 except for changing the maximum value of depth of the symbol in Test Example 1-1. Regarding the maximum value of depth of the symbol, Test Example 1-2 was found to be 2 µm, Test Example 1-3 to be 3 µm, and Test Example 1-4 to be 4 µm. Regarding the maximum value of depth of the symbol, Test Example 1-5 was found to be 5 µm, Test Example 1-6 to be 6 µm, and Test Example 1-7 to be 7 µm.

Regarding the maximum value of depth of the symbol, Test Example 1-8 was found to be 8 µm, Test Example 1-9 to be 9 µm, Test Example 1-10 to be 10 µm, and Test Example 1-11 to be 12 µm. In the test examples, the variation in depth of the symbol was found to be 5% or less with respect to the maximum value.

By reading the symbol with an inspection device, it was found that the information on manufacture of the membrane electrode assembly could be decoded in the test examples.

### [Evaluation methods]

### [Abrasion test]

A region with radius 1 cm around the symbol of each of the membrane electrode assemblies of the test examples was subjected to an abrasion test 100 times in conformity with JIS K 7204: 1999 "Plastics-Determination of resistance to wear by abrasive wheels". In the test, CS-10 was used as the abrasive wheels. Thereafter, evaluation was performed on whether the information recorded in the symbol could be decoded. In detail, the symbol was imaged 10 times and the number of cases in which the information could be decoded was counted.

### [Durability test]

A gas diffusion layer (SIGRACET (registered trade name) 29BB, manufactured by SGL Carbon AG) was, in each of the membrane electrode assemblies, disposed on a surface of each of the electrode catalyst layers that is opposite to a surface thereof in contact with the polyelectrolyte membrane. Then, polymer electrolyte fuel cells including the membrane electrode assemblies were assembled using commercially available JARI standard cells. Subsequently, the durability of the polymer electrolyte fuel cells including the membrane electrode assemblies was evaluated through crossover current measured by a high potential (OCV) holding test method described in "Cell Evaluation Analysis Protocol" issued by New Energy and Industrial Technology Development Organization (NEDO). Thereafter, the cells were disassembled and the membrane electrode assemblies were removed. Then, the gasket was removed from a part in the vicinity of the symbol in the electrolyte layer. In removal of the gasket, when the electrolyte layer was damaged at the symbol, the durability was evaluated as "x", and when the electrolyte layer was not damaged at the symbol, the durability was evaluated as "∘".

### [Evaluation results]

Table 1 below shows the evaluation results of the abrasion test and the durability test performed on the membrane electrode assemblies of the test examples.

**[Table 1]**

| | Maximum value of depth (µm) | Decoded (times) | Durability |
|---|---|---|---|
| Test Example 1-1 | 1 | 3 | ○ |
| Text Example 1-2 | 2 | 4 | ○ |
| Test Example 1-3 | 3 | 9 | ○ |
| Test Example 1-4 | 4 | 10 | ○ |
| Test Example 1-5 | 5 | 10 | ○ |
| Test Example 1-6 | 6 | 10 | ○ |
| Test Example 1-7 | 7 | 10 | ○ |
| Test Example 1-8 | 8 | 10 | ○ |
| Test Example 1-9 | 9 | 10 | X |
| Test Example 1-10 | 10 | 10 | X |
| Test Example 1-11 | 12 | 10 | X |

As shown in Table 1, regarding the number of decodable cases, Test Example 1-1 was found to be three times, Test Example 1-2 to be four times, and Test Example 1-3 to be nine times. Regarding the number of decodable cases, Test Examples 1-4 to 1-11 were found to be 10 times. From these results, it was found that by the maximum value of depth of the symbol being 3 µm or more, the number of decodable cases was considerably increased, compared to the cases in which the depth of the symbol is less than 3 µm.

Regarding the durability of the electrolyte layer, Test Examples 1-1 to 1-8 were found to be "∘", and Test Examples 1-9 to 1-11 to be "x". From these results, it can be said that by the maximum value of depth of the symbol being 2/3 or less the average value of thickness of the electrolyte layer, the electrolyte layer is inhibited from damaging the symbol, that is, the mechanical strength of the electrolyte layer is maintained. When the electrolyte layer was not damaged at the symbol, parts other than the symbol in the electrolyte layer were also found to be not damaged. Regarding the cell including the membrane electrode assembly of Test Example 1-11, gas leakage was also confirmed during the evaluation of durability.

### [Test Examples 2]

### [Test Example 2-1]

A polyelectrolyte membrane (NafionHP, manufactured by The Chemours Company) having an average value of thickness of 12 µm was prepared as the electrolyte layer. Then, a polyethylene naphthalate film (Teonex, TOYOBO Co., Ltd.) (Teonex is a registered trade name) having an average value of thickness of 20 µm was prepared, and then gaskets having a prescribed size were cut out from the polyethylene naphthalate film with a cutting machine (FC4200-50, Graphtec Corporation). Thereafter, one of the gaskets was attached to the first surface of the electrolyte layer. Next, laser light was applied to a 1.5-cm square area of the second surface of the gasket from the side opposite to the electrolyte layer across the gasket with a laser (3-Axis UV laser marker MD-U series, manufactured by KEYENCE CORPORATION). Thereby, a symbol was formed using a laser trace.. In this formation, the information on manufacture of the membrane electrode assembly was encrypted as the symbol. The maximum value of depth of the symbol measured with a laser microscope was found to be 1 µm. The variation in depth of the symbol was found to be 5% or less with respect to the maximum value.

Next, an area surrounded by the gasket was coated with the same slurry as in Test Example 1, and the slurry was dried to obtain an electrode catalyst layer. Subsequently, the other gasket was attached to the second surface of the electrolyte layer. Then, an area surrounded by the gasket was coated with the same slurry as in Test Example 1, and the slurry was dried to obtain an electrode catalyst layer. Thereby, a membrane electrode assembly of Test Example 2-1 was obtained.

The symbol included in the membrane electrode assembly was read with an inspection device and was found that the information on manufacture of the membrane electrode assembly could be decoded.

### [Test Examples 2-2 to 2-9]

Membrane electrode assemblies of Test Examples 2-2 to 2-9 were obtained by the same method as in Test Example 2-1 except for changing the maximum value of depth of the symbol in Test Example 2-1. Regarding the maximum value of depth of the symbol, Test Example 2-2 was found to be 2 µm, Test Example 2-3 to be 3 µm, and Test Example 2-4 to be 4 µm. Regarding the maximum value of depth of the symbol, Test Example 2-5 was found to be 8 µm, Test Example 2-6 to be 12 µm, Test Example 2-7 to be 15 µm, Test Example 2-8 to be 16 µm, and Test Example 2-9 to be 20 µm. In the test examples, the variation in depth of the symbol was found to be 5% or less with respect to the maximum value.

By reading the symbol with an inspection device, it was found that the information on manufacture of the membrane electrode assembly could be decoded in the test examples.

### [Evaluation methods]

### [Abrasion test]

An abrasion test was performed by the same method as in Test Examples 1 except that the object to be tested in the abrasion test was changed from the one in the abrasion test of Test Examples 1 to the symbol included in the gasket.

### [Durability test]

A durability test was performed by the same method as in Test Examples 1 except that the evaluation method in the durability test of Test Examples 1 was changed as follows. That is, in removal of a part in the vicinity of the symbol in the gasket from the electrolyte layer, when the gasket was damaged at the symbol, the durability was evaluated as "x", and when the gasket was not damaged at the symbol, the durability was evaluated as "∘".

### [Evaluation results]

Table 2 below shows the evaluation results of the abrasion test and the durability test performed on the membrane electrode assemblies of the test examples.

**[Table 2]**

| | Maximum value of depth (µm) | Decoded (times) | Durability |
|---|---|---|---|
| Test Example 2-1 | 1 | 3 | ○ |
| Text Example 2-2 | 2 | 5 | ○ |
| Test Example 2-3 | 3 | 9 | ○ |
| Test Example 2-4 | 4 | 10 | ○ |
| Test Example 2-5 | 8 | 10 | ○ |
| Test Example 2-6 | 12 | 10 | ○ |
| Test Example 2-7 | 15 | 10 | ○ |
| Test Example 2-8 | 16 | 10 | X |
| Test Example 2-9 | 20 | 10 | X |

As shown in Table 2, regarding the number of decodable cases, Test Example 2-1 was found to be three times, Test Example 2-2 to be five times, and Test Example 2-3 to be nine times. Regarding the number of decodable cases, Test Examples 2-4 to 2-9 were found to be 10 times. From these results, it was found that by the maximum value of depth of the symbol being 3 µm or more, the number of decodable cases was considerably increased, compared to the cases in which the depth of the symbol is less than 3 µm.

Regarding the durability of the gasket, Test Examples 2-1 to 2-7 were found to be "∘", and Test Examples 2-8 and 2-9 to be "x". From these results, it can be said that by the maximum value of depth of the symbol being 2/3 or less the average value of thickness of the gasket, the gasket is inhibited from damaging the symbol, that is, the mechanical strength of the gasket is maintained. When the gasket was not damaged at the symbol, parts other than the symbol in the gasket were also found to be not damaged.

### [Second embodiment]

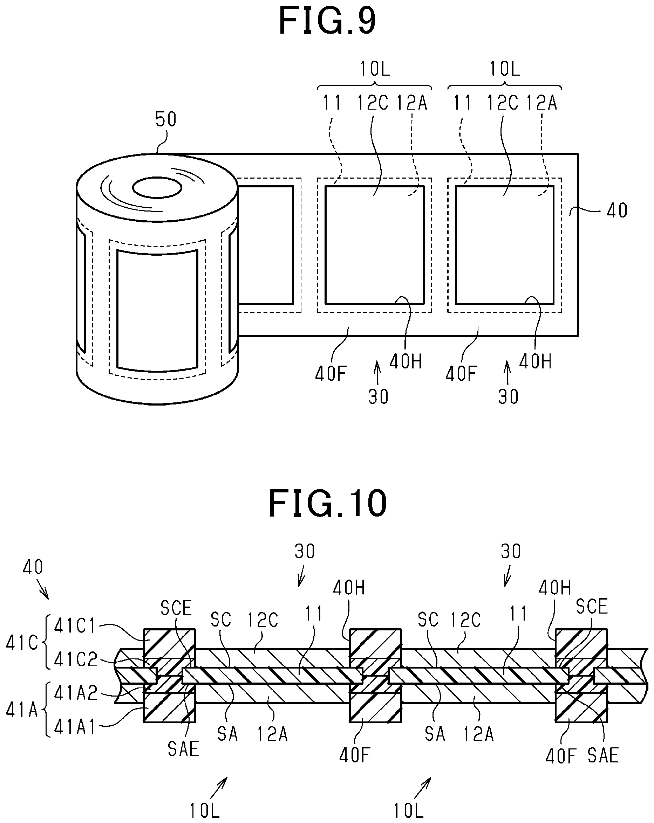

A membrane electrode assembly, a polymer electrolyte fuel cell, a method for manufacturing a membrane electrode assembly, and a method for manufacturing a polymer electrolyte fuel cell according to a second embodiment will be described with reference to Figs. 9 to 12.

### [Membrane electrode assembly]

Fig. 9 is a collective roll of membrane electrode assemblies, the collective roll including a plurality of membrane electrode assemblies connected to each other.

As illustrated in Fig. 9, the collective roll of membrane electrode assemblies (hereinafter, the collective roll) 50 includes a support 40 and a plurality of laminates 10L. The support 40 has a band shape extending along one direction. Fig. 9 illustrates the collective roll 50, with the support 40 having one part thereof wound up. The support 40 includes a plurality of through-holes 40H. The plurality of through-holes 40H are arranged at equal intervals in the direction in which the support 40 extends.

The collective roll 50 includes laminates 10L as many as the through-holes 40H included in the support 40. Each of the laminates 10L includes an electrolyte layer 11, a cathode catalyst layer 12C, and an anode catalyst layer 12A. The laminate 10L is, at an outer edge of the electrolyte layer 11, supported by the support 40. In contrast, the cathode catalyst layer 12C and the anode catalyst layer 12A are positioned in an area defined by each of the through-holes 40H included in the support 40. Thereby, the laminate 10L is one part of the support 40, and is surrounded by a frame portion 40F that is a part defining one through-hole 40H.

Fig. 10 illustrates a cross-sectional structure of the collective roll 50 along the direction in which the support 40 extends and along a plane perpendicular to the plane in which the electrolyte layer 11 extends.

As illustrated in Fig. 10, the support 40 is formed of a cathode support sheet 41C and an anode support sheet 41A. The cathode support sheet 41C is formed of a base material layer 41C1 and an adhesive layer 41C2 laminated on the base material layer 41C1. The anode support sheet 41A is, similarly to the cathode support sheet 41C, formed of a base material layer 41A1 and an adhesive layer 41A2 laminated on the base material layer 41A1.

The cathode support sheet 41C is stacked on the anode support sheet 41A so that the adhesive layers 41A2, 41C2 respectively included in the support sheets 41A, 41C are in contact with each other. Each of the through-holes 40H included in the support 40 is formed by a through-hole included in the cathode support sheet 41C and a through-hole included in the anode support sheet 41A, and is plugged by the laminate 10L sandwiched between the support sheets 41A, 41C. An edge SCE of a cathode surface SC of the electrolyte layer 11 is covered with the adhesive layer 41C2, and an edge SAE of an anode surface SA is covered with the adhesive layer 41A2.

A plurality of membrane electrode assemblies 30 can be obtained from the collective roll 50 by cutting, along the thickness direction of the support 40, the frame portion 40F of the support 40 that is positioned between two electrolyte layers 11.

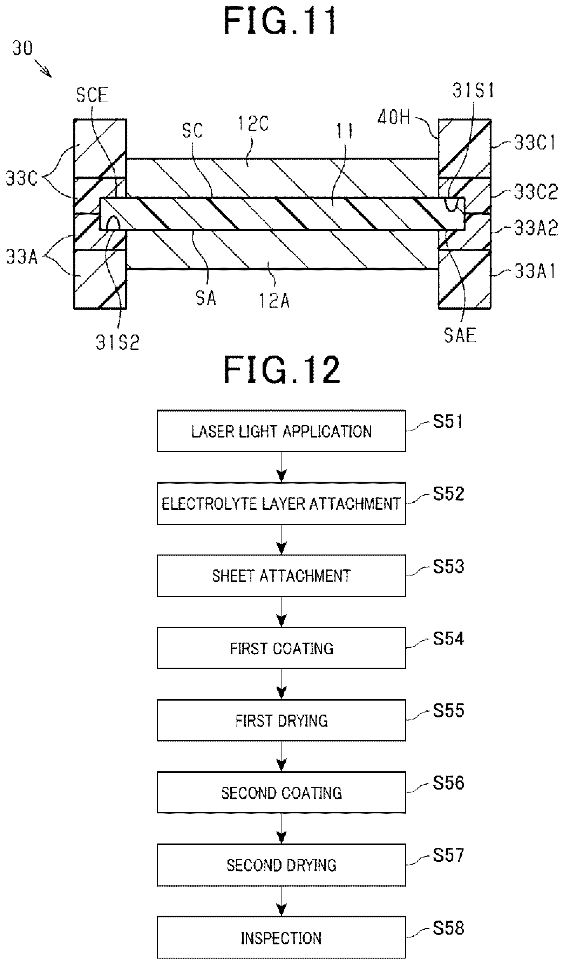

Fig. 11 illustrates a cross-sectional structure of a membrane electrode assembly 30 obtained by cutting the collective roll 50, i.e., a cross-sectional structure of a membrane electrode assembly 30 along a plane perpendicular to the plane in which the electrolyte layer 11 extends.

As illustrated in Fig. 11, the membrane electrode assembly 30 includes an electrolyte layer 11, a cathode catalyst layer 12C, an anode catalyst layer 12A, a cathode gasket 33C, and an anode gasket 33A.

The cathode gasket 33C is one part of the cathode support sheet 41C included in the support 40 of the collective roll 50. The cathode gasket 33C is formed of a base material layer 33C1 and an adhesive layer 33C2. The base material layer 33C1 is one part of the base material layer 41C1 included in the cathode support sheet 41C. The adhesive layer 33C2 is one part of the adhesive layer 41C2 included in the cathode support sheet 41C. In the view from a viewpoint facing the plane in which the electrolyte layer 11 extends, the cathode gasket 33C has a quadrangular frame shape and surrounds the cathode catalyst layer 12C.

The anode gasket 33A is one part of the anode support sheet 41A included in the support 40 of the collective roll 50. The anode gasket 33A is formed of a base material layer 33A1 and an adhesive layer 33A2. The base material layer 33A1 is one part of the base material layer 41A1 included in the anode support sheet 41A. The adhesive layer 33A2 is one part of the adhesive layer 41A2 included in the anode support sheet 41A. In the view from a viewpoint facing the plane in which the electrolyte layer 11 extends, the anode gasket 33A has a quadrangular frame shape and surrounds the anode catalyst layer 12A.

The membrane electrode assembly 30 includes a first symbol 31S1 and a second symbol 31S2. The first symbol 31S1 is positioned in an edge SCE of a cathode surface SC of the electrolyte layer 11, and extends partway through from the cathode surface SC toward an anode surface SA in the thickness direction of the electrolyte layer 11. The first symbol 31S1 is covered with the cathode gasket 33C.

The first symbol 31S1 has a depth that does not penetrate the electrolyte layer 11. The maximum value of depth of the first symbol 31S1 may be 3 µm or more. The variation in depth of the first symbol 31S1 is 5% or less with respect to the maximum value. In other words, for example, when the maximum value of the first symbol 31S1 is 3 µm, the thickness at locations of the first symbol 31S1 is included in the range of 2.85 µm or more and 3 µm or less. The average value of thickness of the electrolyte layer 11 may be 4.5 µm or more. When the maximum value of depth of the first symbol 31S1 is 3 µm or more, it is possible to increase the reliability of retaining the first symbol 31S1 even when the cathode surface SC of the electrolyte layer 11 is abraded.

The maximum value of depth of the first symbol 31S1 may be 2/3 or less the average value of thickness of the electrolyte layer 11. In this case, even when the gaskets 33A, 33C are removed from the electrolyte layer 11 in disassembly of the membrane electrode assembly 30, the electrolyte layer 11 is inhibited from damaging the first symbol 11S1.

The second symbol 31S2 is positioned in an edge SAE of the anode surface SA of the electrolyte layer 11, and extends partway through from the anode surface SA toward the cathode surface SC in the thickness direction of the electrolyte layer 11. The second symbol 31S2 is covered with the anode gasket 33A. The second symbol 31S2 is disposed at a position other than a position opposite to the first symbol 31S1, in the edge SAE of the anode surface SA.

The second symbol 31S2 has a depth that does not penetrate the electrolyte layer 11. The maximum value of depth of the second symbol 31S2 may be 3 µm or more. The variation in depth of the second symbol 31S2 is 5% or less with respect to the maximum value. In other words, for example, when the maximum value of the second symbol 31S2 is 3 µm, the thickness at locations of the second symbol 31S2 is included in the range of 2.85 µm or more and 3 µm or less. The average value of thickness of the electrolyte layer 11 may be 4.5 µm or more. When the maximum value of depth of the second symbol 31S2 is 3 µm or more, it is possible to increase the reliability of retaining the second symbol 31S2 even when the anode surface SA of the electrolyte layer 11 is abraded.

The maximum value of depth of the second symbol 31S2 may be 2/3 or less the average value of thickness of the electrolyte layer 11. In this case, even when the gaskets 33A, 33C are removed from the electrolyte layer 11 in disassembly of the membrane electrode assembly 30, the electrolyte layer 11 is inhibited from damaging the second symbol 11S2.

It is preferred that first symbols 31S1 and second symbols 31S2 are, in the collective roll 50, arranged along the direction in which the support 40 extends, and arranged alternately. The plurality of first symbols 31S1 and the plurality of second symbols 31S2 are further preferably positioned in one straight line along the direction in which the support 40 extends.

### [Method for manufacturing membrane electrode assembly]

A method for manufacturing a membrane electrode assembly 30 will be described with reference to Fig. 12.

As illustrated in Fig. 12, the method for manufacturing a membrane electrode assembly 30 includes a laser light applying step (step S51), an electrolyte layer attaching step (step S52), and a sheet attaching step (step S53). The method for manufacturing a membrane electrode assembly 30 includes a first coating step (step S54), a first drying step (step S55), a second coating step (step S56), a second drying step (step S57), and an inspection step (step S58).

In the laser light applying step, a first symbol 31S1 and a second symbol 31S2 are formed in each of a plurality of electrolyte layers 11 by applying laser light to the electrolyte layers 11 with a carbon dioxide laser. In the formation of the first symbol 31S1, the laser light is applied to an edge SCE of a cathode surface SC. On the other hand, in the formation of the second symbol 31S2, the laser light is applied to an edge SAE of an anode surface SA.

In the electrolyte layer attaching step, the plurality of electrolyte layers 11 are attached to one of support sheets 41A, 41C constituting a support 40. For example, the plurality of electrolyte layers 11 are each, at the edge SCE of the cathode surface SC thereof, attached to the cathode support sheet 41C so that one electrolyte layer 11 covers one through-hole included in the cathode support sheet 41C.

In the sheet attaching step, the other support sheet 41A, 41C, which has not had the electrolyte layers 11 attached thereto in the step S32, of the support sheets 41A, 41C constituting the support 40 is attached to the support sheet 41A, 41C having the electrolyte layers 11 attached thereto. For example, when the electrolyte layers 11 are attached to the cathode support sheet 41C in the step S32, the anode support sheet 41A is attached to the cathode support sheet 41C so as to sandwich the electrolyte layers 11 therebetween. In this attachment, the anode support sheet 41A is attached to the cathode support sheet 41C so as to position one through-hole included in the anode support sheet 41A on one electrolyte layer 11. Thereby, the electrolyte layers 11 are each, at the edge SAE of the anode surface SA thereof, attached to the anode support sheet 41A.

In the first coating step, either one of the cathode surface SC or the anode surface SA of each of the electrolyte layers 11 is coated with a slurry for forming a catalyst layer. In the first coating step, for example, a part of the cathode surface SC, which is exposed from the cathode support sheet 41C, in each of all the electrolyte layers 11 is coated with the slurry to thereby form a coating film.

In the first drying step, the coating film formed from the slurry for forming a cathode catalyst layer 12C is dried. Thereby, a cathode catalyst layer 12C is formed in a part of the cathode surface SC, other than the edge SCE that is an area covered with the cathode support sheet 41C.

In the second coating step, the anode surface SA of the electrolyte layer 11 having the cathode catalyst layer 12C formed thereon is coated with a slurry for forming an anode catalyst layer 12A. In this coating, a part of the anode surface SA, which is exposed from the anode support sheet 41A, is coated with the slurry to thereby form a coating film.

In the second drying step, the coating film formed from the slurry for forming an anode catalyst layer 12A is dried. Thereby, an anode catalyst layer 12A is formed in a part of the anode surface SA, other than the edge SAE that is an area covered with the anode support sheet 41A.

In the inspection step, the first symbols 31S1 and the second symbols 31S2 are inspected. In the inspection step, for example, the first symbols 31S1 are inspected and then the second symbols 31S2 are inspected. In the inspection of the first symbols 31S1 and the second symbols 31S2, the first symbols 31S1 and the second symbols 11S2 are imaged while the support 40 is conveyed along the conveyance direction. When the first symbols 31S1 and the second symbols 31S2 are positioned in one straight line along the conveyance direction, all the symbols 31S1, 31S2 can be imaged with one imaging unit whose position is fixed.

In the inspection step, it is, similarly to the treatment in the step S17 described above, determined on the basis of the images obtained whether the first symbols 31S1 and the second symbols 31S2 can be decoded. After the completion of the inspection step, by cutting the support 40 of the collective roll 50 at frame portions 40F, a plurality of membrane electrode assemblies 30 can be obtained.

In the electrolyte layer attaching step, the plurality of electrolyte layers 11 may be attached to the anode support sheet 41A. In this case, in the sheet attaching step, the cathode support sheet 41C may be attached to the anode support sheet 41A having the plurality of electrolyte layers 11 attached thereto.

In the first coating step, a part of the anode surface SA, which is exposed from the anode support sheet 41A, in each of all the electrolyte layers 11 may be coated with the slurry to thereby form a coating film. In this case, in the first drying step, the coating film formed on the anode surface SA may be dried. In the second coating step, a part of the cathode surface SC, which is exposed from the cathode support sheet 41C, in each of all the electrolyte layers 11 may be coated with the slurry to thereby form a coating film. In the second drying step, the coating film formed on the cathode surface SC may be dried.

In the inspection step, the first symbols 31S2 may be inspected after the second symbols 31S2 are inspected.

### [Materials]

Hereinafter, materials constituting the membrane electrode assembly 30 will be described.

As materials constituting the electrolyte layer 11, the gaskets 13A, 13C, and the catalyst layers 12A, 12C, the materials capable of constituting the membrane electrode assembly 10 according to the first embodiment can be used.

The base material layers 41A1, 41C1 may be formed of resin films. The resin films may be formed of, for example, a fluorine-based resin, polyethylene terephthalate, polyethylene naphthalate, syndiotactic polystyrene, polytetrafluoroethylene, or a polyimide. The fluorine-based resin may be, for example, an ethylene tetrafluoroethylene copolymer, a tetrafluoroethylenehexafluoropropylene copolymer, a tetrafluoroperfluoroalkyl vinyl ether copolymer, or polytetrafluoroethylene. From the viewpoint of enabling formation of a laser trace with an ultraviolet laser, the resin films are preferably formed of polyethylene naphthalate.

The adhesive layers 41A2, 41C2 may be formed of, for example, an epoxy resin, an acrylic resin, a urethane resin, or a silicone resin.

As described above, the membrane electrode assembly, the polymer electrolyte fuel cell, the method for manufacturing a membrane electrode assembly, and the method for manufacturing a polymer electrolyte fuel cell according to the second embodiment can provide effects equivalent to the effects (1-1) to (1-4) described above.

### [Modification examples of second embodiment]

The second embodiment described above can be implemented with the following modifications.

### [Symbols]

- The second symbol 31S2 may be positioned at an end portion of the electrolyte layer 11 that is parallel with an end portion where the first symbol 31S1 is positioned. Alternatively, the second symbol 31S2 may be positioned at an identical end portion of the electrolyte layer 11 with the first symbol 31S1. These cases can provide an effect equivalent to the effect (1-4) described above.

Alternatively, the second symbol 31S2 may be positioned at an end portion of the electrolyte layer 11 that is perpendicular to an end portion where the first symbol 31S1 is positioned.

- As long as the first symbol 31S1 and the second symbol 31S2 can individually be detected, the second symbol 31S2 may be disposed at a site in the edge SAE of the anode surface SA that is opposite to the first symbol 31S1.
- The membrane electrode assembly 30 may include a plurality of first symbols 31S1 positioned on the cathode surface SC, and may include a plurality of second symbols 31S2 positioned on the anode surface SA.
- The membrane electrode assembly 30 includes a symbol positioned on the cathode surface SC, but need not include a symbol positioned on the anode surface SA. In this case, the symbol positioned on the cathode surface SC is preferably a symbol containing therein, as the information required for manufacture of the membrane electrode assembly 30, encoded information required for both manufacture of the cathode catalyst layer 12C and manufacture of the anode catalyst layer 12A.

The membrane electrode assembly 30 includes a symbol positioned on the anode surface SA, but need not include a symbol positioned on the cathode surface SC. In this case, the symbol positioned on the anode surface SA is preferably a symbol containing therein, as the information required for manufacture of the membrane electrode assembly 30, encoded information required for both manufacture of the anode catalyst layer 12A and manufacture of the cathode catalyst layer 12C.

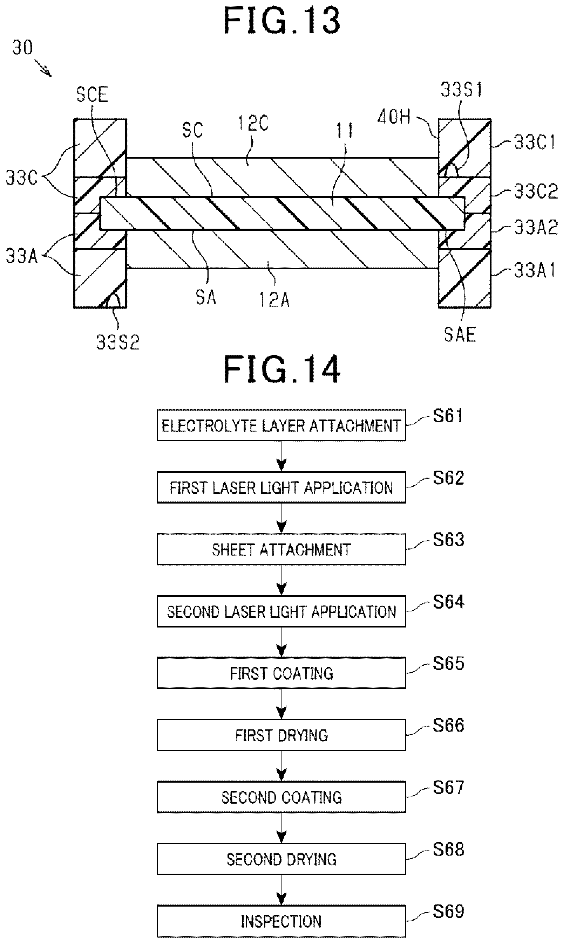

- A membrane electrode assembly 30 including a symbol formed in a gasket will be described with reference to Figs. 13 and 14. The difference between the membrane electrode assembly 30 according to the second embodiment and the membrane electrode assembly 30 according to the present modification example is the position where a symbol is formed. The membrane electrode assembly 30 according to the present modification example has, in parts other than these differences, a common structure with the membrane electrode assembly 30 according to the second embodiment. Therefore, in the following, the structure of the membrane electrode assembly 30 according to the present modification example that is common with the structure of the membrane electrode assembly 30 according to the second embodiment is assigned the identical symbol to omit the detailed description of the structure.

Fig. 13 illustrates a cross-sectional structure of a membrane electrode assembly 30.

As illustrated in Fig. 13, the membrane electrode assembly 30 includes two symbols 33S1, 33S2. The first symbol 33S1 is a discolored laser trace in a cathode gasket 33C.

The first symbol 33S1 is positioned on a first surface of the cathode gasket 33C that faces an electrolyte layer 11. The first symbol 33S1 extends, in the thickness direction of the cathode gasket 33C, partway through from the first surface toward a second surface opposite to the first surface. The first symbol 33S1 is positioned in a base material layer 33C1 of two layers included in the cathode gasket 33C.

The maximum value of depth of the first symbol 33S1 may be 2/3 or less the average value of thickness of the base material layer 33C1. In this case, even when the cathode gasket 33C is removed from the electrolyte layer 11 in disassembly of the membrane electrode assembly 10, the base material layer 33C1 is inhibited from damaging the first symbol 33S1.

The second symbol 33S2 is a discolored laser trace in an anode gasket 33A. The second symbol 33S2 is positioned on a second surface of the anode gasket 33A that is opposite to a first surface thereof in contact with the electrolyte layer 11. The second symbol 33S2 extends partway through from the second surface toward the first surface in the thickness direction of the anode gasket 33A. The second symbol 33S2 is positioned in a base material layer 33A1 of two layers included in the anode gasket 33A.

The second symbol 33S2 has a depth that does not penetrate the base material layer 33A1. The maximum value of depth of the second symbol 33S2 may be 3 µm or more. The variation in depth of the second symbol 33S2 is 5% or less with respect to the maximum value. In other words, for example, when the maximum value of the second symbol 33S2 is 3 µm, the thickness at locations of the second symbol 33S2 is included in the range of 2.85 µm or more and 3 µm or less. The average value of thickness of the base material layer 33A1 may be 20 µm or more. When the maximum value of depth of the second symbol 33S2 is 3 µm, it is possible to increase the reliability of retaining the second symbol 33S2 even when the second surface of the anode gasket 33A is abraded.

The maximum value of depth of the second symbol 33S2 may be 2/3 or less the average value of thickness of the base material layer 33A1. In this case, even when the anode gasket 33A is removed from the electrolyte layer 11 in disassembly of the membrane electrode assembly 30, the anode gasket 33A is inhibited from damaging the second symbol 33S2.

Fig. 14 is a flow chart for describing a method, according to the present modification example, for manufacturing a membrane electrode assembly 30.

As illustrated in Fig. 14, the method for manufacturing a membrane electrode assembly 30 includes an electrolyte layer attaching step (step S61), a first laser light applying step (step S62), a sheet attaching step (step S63), and a second laser light applying step (step S64). The method for manufacturing a membrane electrode assembly 30 includes a first coating step (step S65), a first drying step (step S66), a second coating step (step S67), a second drying step (step S68), and an inspection step (step S69).

In the electrolyte layer attaching step, a plurality of electrolyte layers 11 are attached to a cathode support sheet 41C. In this attachment, the plurality of electrolyte layers 11 are each, at an edge SCE of a cathode surface SC thereof, attached to the cathode support sheet 41C so that one electrolyte layer 11 covers one through-hole included in the cathode support sheet 41C.

In the first laser light applying step, a first symbol 33S1 is formed in each of the plurality of electrolyte layers 11 by applying laser light to the electrolyte layers 11 with an ultraviolet laser. In this formation, the laser light is applied through the electrolyte layer 11 into the cathode support sheet 41C. By applying laser light to the electrolyte layer 11 and the cathode support sheet 41C with an ultraviolet laser, the first symbol 33S1 is formed in the cathode support sheet 41C.

Thereby, the first symbol 33S1 can be formed in a base material layer 41C1 of the cathode support sheet 41C. The first symbol 33S1 is formed at the boundary between the base material layer 41C1 and an adhesive layer 41C2. The first symbol 33S1 has a length that reaches partway through the base material layer 41C1 in the thickness direction of the cathode support sheet 41C.

In the sheet attaching step, an anode support sheet 41A is attached to the cathode support sheet 41C having the electrolyte layers 11 attached thereto. The anode support sheet 41A is attached to the cathode support sheet 41C so as to position one through-hole included in the anode support sheet 41A on one electrolyte layer 11. Thereby, the electrolyte layers 11 are, each at an edge SAE of an anode surface SA thereof, attached to the anode support sheet 41A.

In the second laser light applying step, lase light is applied into the anode support sheet 41A. In this application, the laser light is, with an ultraviolet laser, applied to a second surface of the anode support sheet 41Athat is opposite to a first surface thereof in contact with the electrolyte layer 11. Thereby, a second symbol 33S2 that is positioned on the second surface of the anode support sheet 41A and extends partway through from the second surface toward the first surface in the thickness direction of the anode support sheet 41A can be formed in a base material layer 41C1.

In the steps from the first coating step to the inspection step, the identical treatments with the steps from the first coating step (step S64) to the inspection step (step S68) of the second embodiment described above are performed. After the completion of the inspection step, by cutting a support 40 of a collective roll 50 at frame portions 40F, a plurality of membrane electrode assemblies 30 can be obtained.

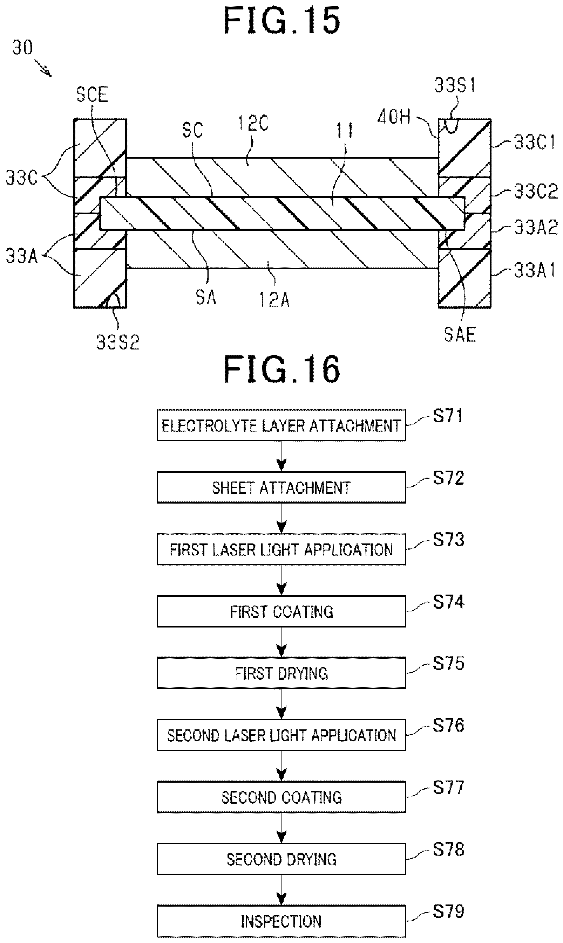

The present modification example can provide effects equivalent to the effects (1-5) to (1-7) described above.
- As illustrated in Fig. 15, the first symbol 33S1 may be positioned on the second surface of the base material layer 33C1, and the second symbol 33S2 may be positioned on the second surface of the base material layer 33A1. That is, the first symbol 33S1 may be positioned on a surface of the base material layer 33C1 that is opposite to a surface thereof in contact with the adhesive layer 33C2, and the second symbol 33S2 may be positioned on a surface of the base material layer 33A1 that is opposite to a surface thereof in contact with the adhesive layer 33A2. In this case, the laser light may be applied to the two base material layers 33C1, 33A1 after the sheet attaching step.

The first symbol 33S1 has a depth that does not penetrate the base material layer 33C1. The maximum value of depth of the first symbol 33S1 may be 3 µm or more. The variation in depth of the first symbol 33S1 is 5% or less with respect to the maximum value. In other words, for example, when the maximum value of the first symbol 33S1 is 3 µm, the thickness at locations of the first symbol 33S1 is included in the range of 2.85 µm or more and 3 µm or less. The average value of thickness of the base material layer 33C1 may be 20 µm or more. When the maximum value of depth of the first symbol 33S1 is 3 µm, it is possible to increase the reliability of retaining the first symbol 33S1 even when the second surface of the cathode gasket 33C is abraded.

Alternatively, the membrane electrode assembly 30 may be manufactured by the method illustrated in Fig. 16.

As illustrated in Fig. 16, the method for manufacturing a membrane electrode assembly 30 includes an electrolyte layer attaching step (step S71), a sheet attaching step (step S72), a first laser light applying step (step S73), a first coating step (step S74), and a first drying step (step S75). The method for manufacturing a membrane electrode assembly 30 also includes a second laser light applying step (step S76), a second coating step (step S77), a second drying step (step S78), and an inspection step (step S79).

The first laser light applying step and the first coating step are performed on either one of a cathode surface SC and a base material layer 41C1, or an anode surface SA and a base material layer 41A1. Next, the second laser light applying step and the second coating step are performed on the other combination, which has not had the first laser light applying step and the first coating step performed thereon, of the combinations of the surfaces included in the electrolyte layer 11 and the base material layers 41C1, 41A1.

- In the electrolyte layer attaching step, an electrolyte layer 11 may be attached to an anode support sheet 41A. In this case, the laser light is applied to the anode support sheet 41A via the electrolyte layer 11 in the first laser light applying step. Thereby, a second symbol 33S2 can be formed on a surface of the anode support sheet 41A that faces an anode surface SA of the electrolyte layer 11. That is, the second symbol 33S2 can be formed in an adhesive layer 41A2 of the anode support sheet 41A. Next, in the sheet attaching step, a cathode support sheet 41C is attached to the anode support sheet 41A so as to sandwich the electrolyte layer 11 between the cathode support sheet 41C and the anode support sheet 41A. In the second laser light applying step, a first symbol 33S1 is formed in a base material layer 41C1 of the cathode support sheet 41C by applying laser light to the cathode support sheet 41C.
- In the view from a viewpoint facing the plane in which the electrolyte layer 11 extends, the second symbol 33S2 may be positioned on a side of the anode gasket 33A that is parallel with a side of the cathode gasket 33C where the first symbol 33S1 is positioned. Alternatively, in the view from a viewpoint facing the plane in which the electrolyte layer 11 extends, the second symbol 33S2 may be positioned on a side of the anode gasket 33A that overlaps a side of the cathode gasket 33C where the first symbol 33S1 is positioned. These cases can provide an effect equivalent to the effect (1-4) described above.

Alternatively, in the view from a viewpoint facing the plane in which the electrolyte layer 11 extends, the second symbol 33S2 may be positioned on a side of the anode gasket 33A that is perpendicular to a side of the cathode gasket 33C where the first symbol 33S1 is positioned.

- As long as the first symbol 33S1 and the second symbol 33S2 can individually be detected, the second symbol 33S2 may be disposed at a site in the anode gasket 33A that is opposite to the first symbol 33S1.
- The membrane electrode assembly 30 may include a plurality of first symbols 33S1 positioned in the cathode gasket 33C, and may include a plurality of second symbols 33S2 positioned in the anode gasket 33A.
- The membrane electrode assembly 30 includes a symbol positioned in the cathode gasket 33C, but need not include a symbol positioned in the anode gasket 33A. In this case, the symbol positioned in the cathode gasket 33C is preferably a symbol containing therein, as the information required for manufacture of the membrane electrode assembly 30, encoded information required for both manufacture of the cathode catalyst layer 12C and manufacture of the anode catalyst layer 12A.

The membrane electrode assembly 30 includes a symbol positioned in the anode gasket 33A, but need not include a symbol positioned in the cathode gasket 33C. In this case, the symbol positioned in the anode gasket 33A is preferably a symbol containing therein, as the information required for manufacture of the membrane electrode assembly 30, encoded information required for both manufacture of the anode catalyst layer 12A and manufacture of the cathode catalyst layer 12C.

### [Application object]

- The membrane electrode assembly 30 according to the second embodiment may be used not only as a membrane electrode assembly included in a polymer electrolyte fuel cell but also as a membrane electrode assembly included in an apparatus other than polymer electrolyte fuel cells, and may be used, for example, as a membrane electrode assembly included in a hydrogen compressor. This case can also provide effects equivalent to the effects (1-1) to (1-7) described above.

### [Reference Signs List]

- 10: Membrane electrode assembly
- 11: Electrolyte layer
- 12C: Cathode catalyst layer
- 12A: Anode catalyst layer
- 13C: Cathode gasket
- 13A: Anode gasket
- 20: Polymer electrolyte fuel cell

## Claims

1. A membrane electrode assembly comprising:
an electrolyte layer; and
a catalyst layer that includes particles carrying a catalyst metal and is positioned on a first surface of the electrolyte layer,
the membrane electrode assembly comprising a symbol containing therein encoded information required for manufacture of the membrane electrode assembly, and
the symbol being a discolored laser trace in the electrolyte layer and being disposed in an edge of the first surface where the catalyst layer is not positioned.

2. The membrane electrode assembly according to claim 1, wherein
a maximum value of depth of the symbol is 3 µm or more, and
the symbol does not penetrate the electrolyte layer in a thickness direction of the electrolyte layer.

3. The membrane electrode assembly according to claim 2, wherein
the maximum value of depth of the symbol is 2/3 or less an average value of thickness of the electrolyte layer.

4. The membrane electrode assembly according to any one of claims 1 to 3, wherein
the symbol is disposed so as to be covered with a gasket in contact with the edge.

5. The membrane electrode assembly according to any one of claims 1 to 4, wherein
the catalyst layer is a first catalyst layer,
the symbol is a first symbol containing therein encoded information required for manufacture of the first catalyst layer,
the membrane electrode assembly further comprises:
a second catalyst layer that includes particles carrying a catalyst metal and is positioned on a second surface opposite to the first surface of the electrolyte layer; and
a second symbol containing therein encoded information required for manufacture of the second catalyst layer, and
the second symbol is a discolored laser trace in the electrolyte layer, and is disposed at a position other than a position opposite to the first symbol, in an edge of the second surface where the second catalyst layer is not positioned.

6. The membrane electrode assembly according to claim 5, wherein
the electrolyte layer includes two end portions that are parallel with each other, and
the first symbol and the second symbol are disposed in different end portions or one end portion of the two end portions.

7. A membrane electrode assembly comprising:
an electrolyte layer; and
a catalyst layer that includes particles carrying a catalyst metal and is positioned on a first surface of the electrolyte layer,
the membrane electrode assembly comprising:
a gasket in contact with an edge of the first surface where the catalyst layer is not positioned; and
a symbol containing therein encoded information required for manufacture of the membrane electrode assembly,
the symbol being a discolored laser trace in the gasket.

8. The membrane electrode assembly according to claim 7, wherein
a maximum value of depth of the symbol is 3 µm or more, and
the symbol does not penetrate the gasket in a thickness direction of the gasket.

9. The membrane electrode assembly according to claim 8, wherein
the maximum value of depth of the symbol is 2/3 or less an average value of thickness of the gasket.

10. The membrane electrode assembly according to any one of claims 7 to 9, wherein
the symbol is positioned on a surface of the gasket that faces the electrolyte layer.

11. A polymer electrolyte fuel cell comprising the membrane electrode assembly according to any one of claims 1 to 10.

12. A method for manufacturing a membrane electrode assembly, the method comprising forming, on a first surface of an electrolyte layer, a catalyst layer including particles carrying a catalyst metal,
the method comprising forming a symbol containing therein encoded information required for manufacture of the membrane electrode assembly, in an edge of the first surface where the catalyst layer is not positioned, by applying laser light to the edge with a carbon dioxide laser.

13. A method for manufacturing a membrane electrode assembly, the method comprising forming, on a first surface of an electrolyte layer, a catalyst layer including particles carrying a catalyst metal,
the method comprising forming a symbol containing therein encoded information required for manufacture of the membrane electrode assembly, in a gasket in contact with an edge of the first surface where the catalyst layer is not positioned, by applying laser light to the gasket.

14. The method according to claim 13, wherein
the forming a symbol includes forming the symbol by, after disposing the gasket so as to be in contact with the edge, applying the laser light through the electrolyte layer into the gasket with an ultraviolet laser.

15. The method according to claim 12, wherein
the catalyst layer is a first catalyst layer, and
the symbol is a first symbol containing therein encoded information required for manufacture of the first catalyst layer,
the method comprising:
forming a second catalyst layer including particles carrying a catalyst metal, on a second surface opposite to the first surface of the electrolyte layer; and
forming a second symbol containing therein encoded information required for manufacture of the second catalyst layer, by applying, with the carbon dioxide laser, laser light to an edge of the second surface where the second catalyst layer is not positioned,
the forming a first symbol includes performing, after forming the first symbol at one end portion of the electrolyte layer, inspection of the first symbol while conveying the electrolyte layer in a conveyance direction along the one end portion, and
the forming a second symbol includes performing, after forming the second symbol at the one end portion or another end portion parallel with the one end portion of the electrolyte layer, inspection of the second symbol while conveying the electrolyte layer in the conveyance direction.

16. A method for manufacturing a polymer electrolyte fuel cell, the method comprising manufacturing a membrane electrode assembly by the method according to any one of claims 12 to 15.
